# EUROPEAN PATENT APPLICATION

(11) **EP 4 167 623 A1**
(43) Date of publication of application: **19.04.2023**
(21) Application number: 21834135.2
(22) Date of filing: 17.06.2021
(51) Int. Cl.: H04W 24/02

(54) **COMMUNICATION METHOD AND RELATED DEVICE**

(30) Priority: 29.06.2020 CN 202010605980
(71) Applicant: Huawei Technologies Co., Ltd., Longgang District, Shenzhen, Guangdong 518129 (CN)
(72) Inventor: WANG, Nanxin, Shenzhen, Guangdong 518129 (CN); PENG, Wenjie, Shenzhen, Guangdong 518129 (CN); SHI, Yulong, Shenzhen, Guangdong 518129 (CN)
(74) Representative: Grünecker Patent- und Rechtsanwälte PartG mbB
(86) International application number: PCT/CN2021/100508
(87) International publication number: WO 2022/001676

(57) **Abstract**

Embodiments of this application provide a communication method and a related device. In the method, a first terminal device receives a first radio resource control RRC message from a second terminal device, and then sends a first message to a network device through a first radio bearer configured by using obtained first configuration information. The first message includes a first RRC message that requests to set up an RRC connection between the second terminal device and the network device, and identification information of the second terminal device. In this way, communication between the second terminal device and the network device is implemented in a user equipment-to-network relay (U2N) scenario. This increases a success rate of accessing the network device by the second terminal device, enhances a coverage capability of the network device, and improves an access capacity of the network device.

## Description

This application claims priority to Chinese Patent Application No. 202010605980.3, filed with the China National Intellectual Property Administration on June 29, 2020 and entitled "COMMUNICATION METHOD AND RELATED DEVICE", which is incorporated herein by reference in its entirety.

### TECHNICAL FIELD

This application relates to the communication field, and in particular, to a communication method and a related device in a user equipment-to-network relay scenario.

### BACKGROUND

User equipment-to-network relay (user equipment-to-network relay, U2N) refers to a communication technology in which a user equipment (remote UE) accesses a network through another user equipment (relay UE), and may be applied to a scenario in which the remote UE has a poor coverage signal or is located outside network coverage, to implement network coverage enhancement and capacity improvement. The user equipment may also be referred to as a terminal device.

In a conventional technology, before communicating with a network device, a UE needs to exchange a message related to radio resource control (radio resource control, RRC) connection setup, to set up an RRC connection between the UE and the network device. Because a message is transferred between a remote UE and the network device by using a relay service provided by a relay UE, the relay UE needs to forward a message related to setup of an RRC connection between the remote UE and the network device, to implement a process of setting up the RRC connection between the remote UE and the network device.

However, currently, there is no bearer that is between the relay UE and the network device and that is used to forward the message. As a result, the RRC connection cannot be set up between the remote UE and the network device. Therefore, how to forward, through the relay UE, the message related to setup of the RRC connection between the remote UE and the network device, to implement communication between the remote UE and the network device is an urgent problem to be resolved.

### SUMMARY

Embodiments of this application provide a communication method and a related device, to implement communication between a second terminal device and a network device in a user equipment-to-network relay (U2N) scenario. This increases a success rate of accessing the network device by the second terminal device, enhances a coverage capability of the network device, and improves an access capacity of the network device.

According to a first aspect of embodiments of this application, a communication method is provided. The method may be applied to a first terminal device or a component (for example, a processor, a chip, or a chip system) of the first terminal device for execution. In the method, the first terminal device obtains first configuration information, where the first configuration information is used to configure a first radio bearer between the first terminal device and a network device, and the first radio bearer includes a first signaling radio bearer SRB or a first data radio bearer DRB. Then, the first terminal device receives a first radio resource control RRC message from a second terminal device, where the first RRC message requests to set up an RRC connection between the second terminal device and the network device. Then, the first terminal device sends a first message to the network device through the first radio bearer, where the first message includes the first RRC message and identification information of the second terminal device. The first terminal device may be a relay terminal device, and the second terminal device may be a remote terminal device. After receiving the first radio resource control RRC message from the second terminal device, the first terminal device sends the first message to the network device through the first radio bearer configured by using the obtained first configuration information, where the first message includes the first RRC message that requests to set up the RRC connection between the second terminal device and the network device and the identification information of the second terminal device. That is, the first terminal device forwards the first RRC message from the second terminal device by sending the first message to the network device through the first radio bearer, and includes, in the first message, the identification information that identifies the second terminal device. Then, the network device may set up the RRC connection to the second terminal device based on the first message and perform communication. In this way, communication between the second terminal device and the network device is implemented in a user equipment-to-network relay (U2N) scenario. This increases a success rate of accessing the network device by the second terminal device, enhances a coverage capability of the network device, and improves an access capacity of the network device.

In a possible implementation of the first aspect of embodiments of this application, a process in which the first terminal device obtains the first configuration information may specifically include: The first terminal device receives the first configuration information from the network device; or obtains predefined first configuration information.

In this embodiment, the first terminal device may obtain the first configuration information by receiving the first configuration information from the network device, or may obtain the first configuration information based on the predefined first configuration information. That is, the first terminal device may obtain the first configuration information by using a configuration of the network device or a predefined configuration, to flexibly configure the first configuration information and improve feasibility of the solution.

In a possible implementation of the first aspect of embodiments of this application, before that the first terminal device receives the first configuration information from the network device, the method may further include: The first terminal device sends a first request message to the network device, where the first request message requests the first configuration information.

In this embodiment, in a manner in which the first terminal device obtains the first configuration information by receiving the first configuration information from the network device, before receiving the first configuration information, the first terminal device may send, to the network device, the first request message that requests the first configuration information, so that the network device can trigger, based on the first request message, sending of the first configuration information to the first terminal device. This provides a specific implementation in which the network device determines the first configuration information, and improves feasibility of the solution, thereby improving implementation flexibility of the solution.

In a possible implementation of the first aspect of embodiments of this application, the first request message may include a first indication, and the first indication indicates information that the first terminal device has a capability of providing a relay service; and/or the first request message may include a second indication, and the second indication indicates information about a quantity of terminal devices that can perform access through the first terminal device.

In this embodiment, the first terminal device may request the first configuration information from the network device based on capability indication information of the first terminal device. This may be specifically implemented by including the first indication and/or the second indication in the first request message sent to the network device. This provides a specific implementation in which the first terminal device sends the first request message to the network device, and improves feasibility of the solution, thereby improving implementation flexibility of the solution.

In a possible implementation of the first aspect of embodiments of this application, the first configuration information further includes second configuration information, the second configuration information is used to configure a second radio bearer between the first terminal device and the network device, and the second radio bearer includes a second SRB or a second DRB. In addition, the first terminal device receives a second RRC message from a third terminal device, where the second RRC message requests to set up an RRC connection between the third terminal device and the network device. Then, the first terminal device sends a second message to the network device through the second radio bearer, where the second message includes the second RRC message and identification information of the third terminal device.

In this embodiment, the first configuration information obtained by the first terminal device further includes the second configuration information used to configure the second radio bearer. The first radio bearer may be different from the second radio bearer. The second terminal device and the third terminal device may each be a remote terminal device (remote UE), and are not a same remote UE. In other words, the first terminal device may configure the plurality of different radio bearers by using the first configuration information, to separately send the RRC messages of the different remote UEs, and carry the identification information of the corresponding remote UEs. In this way, communication between the plurality of terminal devices and the network device is implemented in the user equipment-to-network relay (U2N) scenario. This increases a success rate of accessing the network device by the plurality of terminal devices, further enhances the coverage capability of the network device, and further improves the access capacity of the network device.

In a possible implementation of the first aspect of embodiments of this application, the first terminal device determines, according to a preset rule, that a radio bearer corresponding to the second terminal device is the first radio bearer; and/or the first terminal device determines, according to a preset rule, that a radio bearer corresponding to the third terminal device is the second radio bearer.

In this embodiment, the first configuration information may be used to configure the plurality of radio bearers (including the first radio bearer and the second radio bearer). After separately receiving the RRC messages that are sent by the plurality of terminal devices (the second terminal device and the third terminal device) and that request to set up the RRC connections between the plurality of terminal devices and the network device, the first terminal device may separately determine the corresponding radio bearers for the plurality of terminal devices according to the preset rule. The preset rule may be separately determining the corresponding radio bearers for the plurality of terminal devices based on device priorities or device type information of the plurality of terminal devices, depending on whether the radio bearers of the plurality of terminal devices are idle, or according to another rule. This provides a specific implementation in which the first terminal device determines the corresponding radio bearers for the plurality of terminal devices, and improves feasibility of the solution, thereby improving implementation flexibility of the solution.

In a possible implementation of the first aspect of embodiments of this application, a logical channel configuration in the first configuration information includes logical channel group LCG information and/or schedule request SR information, and the LCG information and/or the SR information request/requests, from the network device, a resource for sending the first message (and/or the second message).

In this embodiment, in a process in which the first terminal device sends the first message (and/or the second message) to the network device through the first radio bearer, the first terminal device may request, from the network device by using the LCG information and/or the SR information in the logical channel configuration in the first configuration information, the resource for sending the first message (and/or the second message), so that the network device configures, for the first terminal device, a transmission resource corresponding to the first message (and/or the second message). This increases a success rate of sending the first message (and/or the second message), thereby increasing the success rate of accessing the network device by the second terminal device (and/or the third terminal device).

In a possible implementation of the first aspect of embodiments of this application, when determining that no resource is available, the first terminal device sends, to the network device based on the LCG information and/or the SR information, a request message used to apply for a resource.

In this embodiment, only when determining that no resource is available, the first terminal device sends, to the network device based on the LCG information and/or the SR information, the request message (a buffer status report BSR and/or a schedule request SR) used to apply for the resource. In this way, the first terminal device may determine, depending on whether there is an available resource, to send, to the network device, the request message used to apply for the resource. This can reduce signaling consumption of the first terminal device, and increase the success rate of accessing the network device by the second terminal device (and/or the third terminal device).

In a possible implementation of the first aspect of embodiments of this application, the first RRC message includes an RRC connection request message, an RRC reestablishment request message, or an RRC connection resume request message.

In this embodiment, the first RRC message may specifically include the RRC connection request message, the RRC reestablishment request message, the RRC connection resume request message, or another message that requests to set up the RRC connection between the second terminal device and the network device. This provides a plurality of specific implementations of the first RRC message, and improves feasibility of the solution, thereby improving implementation flexibility of the solution.

In a possible implementation of the first aspect of embodiments of this application, the second RRC message includes an RRC connection request message, an RRC reestablishment request message, or an RRC connection resume request message.

In this embodiment, the second RRC message may specifically include the RRC connection request message, the RRC reestablishment request message, the RRC connection resume request message, or another message that requests to set up the RRC connection between the third terminal device and the network device. This provides a plurality of specific implementations of the second RRC message, and improves feasibility of the solution, thereby improving implementation flexibility of the solution.

According to a second aspect of embodiments of this application, a communication method is provided. The method may be applied to a network device or a component (for example, a processor, a chip, or a chip system) of the network device for execution. In the method, the network device sends first configuration information to a first terminal device, where the first configuration information is used to configure a first radio bearer between the first terminal device and the network device, and the first radio bearer includes a first signaling radio bearer SRB or a first data radio bearer DRB. Then, the network device receives, through the first radio bearer, a first message sent by the first terminal device, where the first message includes a first RRC message and identification information of a second terminal device, and the first RRC message requests to set up an RRC connection between the second terminal device and the network device. The first terminal device may be a relay terminal device, and the second terminal device may be a remote terminal device. The network device may configure the first radio bearer between the first terminal device and the network device by using the first configuration information sent to the first terminal device, and receive, through the first radio bearer, the first message sent by the first terminal device, where the first message includes the first RRC message that requests to set up the RRC connection between the second terminal device and the network device and the identification information of the second terminal device. That is, the first terminal device forwards the first RRC message from the second terminal device by sending the first message to the network device through the first radio bearer, and includes, in the first message, the identification information that identifies the second terminal device. Then, the network device may set up the RRC connection to the second terminal device based on the first message and perform communication. In this way, communication between the second terminal device and the network device is implemented in a user equipment-to-network relay (U2N) scenario. This increases a success rate of accessing the network device by the second terminal device, enhances a coverage capability of the network device, and improves an access capacity of the network device.

In a possible implementation of the second aspect of embodiments of this application, before that the network device sends first configuration information to a first terminal device, the method may further include: The network device receives a first request message from the first terminal device, where the first request message requests the first configuration information.

In this embodiment, before sending the first configuration information to the first terminal device, the network device may receive, from the first terminal device, the first request message that requests the first configuration information, so that the network device can trigger, based on the first request message, sending of the first configuration information to the first terminal device. This provides a specific implementation in which the network device determines the first configuration information, and improves feasibility of the solution, thereby improving implementation flexibility of the solution.

In a possible implementation of the second aspect of embodiments of this application, the first request message may include a first indication, and the first indication indicates information that the first terminal device has a capability of providing a relay service; and/or the first request message includes a second indication, and the second indication indicates information about a quantity of terminal devices that can perform access through the first terminal device.

In this embodiment, the first terminal device may request the first configuration information from the network device based on capability indication information of the first terminal device. In this case, the first request message received by the network device from the first terminal device carries the first indication and/or the second indication. Then, the network device may allocate a radio bearer to the first terminal device based on the first indication and/or the second indication, and send, to the first terminal device, the first configuration information used to configure the radio bearer. This provides a specific implementation in which the network device determines the first configuration information, and improves feasibility of the solution, thereby improving implementation flexibility of the solution.

In a possible implementation of the second aspect of embodiments of this application, the first configuration information further includes second configuration information, the second configuration information is used to configure a second radio bearer between the first terminal device and the network device, and the second radio bearer includes a second SRB or a second DRB. In addition, the network device receives, through the second radio bearer, a second message sent by the first terminal device, where the second message includes a second RRC message and identification information of a third terminal device, and the second RRC message requests to set up an RRC connection between the third terminal device and the network device.

In this embodiment, the first configuration information sent by the network device to the first terminal device further includes the second configuration information used to configure the second radio bearer. The first radio bearer may be different from the second radio bearer. The second terminal device and the third terminal device may each be a remote terminal device (remote UE), and are not a same remote UE. In other words, the first terminal device may configure the plurality of different radio bearers by using the first configuration information, to separately send the RRC messages of the different remote UEs, and carry the identification information of the corresponding remote UEs. In this way, communication between the plurality of terminal devices and the network device is implemented in the user equipment-to-network relay (U2N) scenario. This increases a success rate of accessing the network device by the plurality of terminal devices, further enhances the coverage capability of the network device, and further improves the access capacity of the network device.

In a possible implementation of the second aspect of embodiments of this application, a logical channel configuration in the first configuration information includes logical channel group LCG information and/or SR information, and the LCG information and/or the SR information request/requests, from the network device, a resource for sending the first message.

In this embodiment, the first configuration information sent by the network device to the first terminal device includes the LCG information and/or the SR information in the logical channel configuration, where the LCG information and/or the SR information are/is used by the first terminal device to request, from the network device, the resource for sending the first message (and/or the second message). In this way, after the first terminal device requests, from the network device based on the LCG information and/or the SR information, the resource for sending the first message (and/or the second message), the network device may configure, for the first terminal device, a transmission resource corresponding to the first message (and/or the second message). This increases a success rate of sending the first message (and/or the second message), thereby increasing the success rate of accessing the network device by the second terminal device (and/or the third terminal device).

In a possible implementation of the second aspect of embodiments of this application, the first RRC message includes an RRC connection request message, an RRC reestablishment request message, or an RRC connection resume request message.

In this embodiment, the first RRC message may specifically include the RRC connection request message, the RRC reestablishment request message, the RRC connection resume request message, or another message that requests to set up the RRC connection between the second terminal device and the network device. This provides a plurality of specific implementations of the first RRC message, and improves feasibility of the solution, thereby improving implementation flexibility of the solution.

In a possible implementation of the second aspect of embodiments of this application, the second RRC message includes an RRC connection request message, an RRC reestablishment request message, or an RRC connection resume request message.

In this embodiment, the second RRC message may specifically include the RRC connection request message, the RRC reestablishment request message, the RRC connection resume request message, or another message that requests to set up the RRC connection between the third terminal device and the network device. This provides a plurality of specific implementations of the second RRC message, and improves feasibility of the solution, thereby improving implementation flexibility of the solution.

According to a third aspect of embodiments of this application, a communication method is provided. The method may be applied to a first terminal device or a component (for example, a processor, a chip, or a chip system) of the first terminal device for execution. In the method, the first terminal device receives a first radio resource control RRC message from a second terminal device, where the first RRC message requests to set up an RRC connection between the second terminal device and a network device. Then, the first terminal device sends a second request message to the network device, where the second request message requests first configuration information, the first configuration information is used to configure a first radio bearer between the first terminal device and the network device, the first radio bearer includes a first signaling radio bearer SRB or a first data radio bearer DRB, and the second request message includes identification information of the second terminal device. Then, the first terminal device receives the first configuration information from the network device. Further, the first terminal device sends a first message to the network device through the first radio bearer, where the first message includes the first RRC message. The first terminal device may be a relay terminal device, and the second terminal device may be a remote terminal device. After receiving the first RRC message from the second terminal device, the first terminal device sends, to the network device, the second request message that requests the first configuration information, where the first configuration information is used to configure the first radio bearer between the first terminal device and the network device. Then, after receiving the first configuration information from the network device, the first terminal device sends, to the network device through the first radio bearer, the first message that carries the first RRC message. That is, the first terminal device forwards the first RRC message from the second terminal device by sending the first message to the network device through the first radio bearer configured by using the first configuration information sent by the network device. Then, the network device may set up the RRC connection to the second terminal device based on the first message and perform communication. In this way, communication between the second terminal device and the network device is implemented in a user equipment-to-network relay (U2N) scenario. This increases a success rate of accessing the network device by the second terminal device, enhances a coverage capability of the network device, and improves an access capacity of the network device.

In a possible implementation of the third aspect of embodiments of this application, the first message further includes the identification information of the second terminal device.

In this embodiment, the first message sent by the first terminal device to the network device may further include the identification information of the second terminal device, to identify the first RRC message in the first message, so that the network device can determine that the first RRC message is associated with the second terminal device. This increases the success rate of accessing the network device by the second terminal device.

In a possible implementation of the third aspect of embodiments of this application, a logical channel configuration in the first configuration information may include logical channel group LCG information and/or SR information, and the LCG information and/or the SR information request/requests, from the network device, a resource for sending the first message.

In this embodiment, in a process in which the first terminal device sends the first message to the network device through the first radio bearer, the first terminal device may request, from the network device by using the LCG information and/or the SR information in the logical channel configuration in the first configuration information, the resource for sending the first message, so that the network device configures, for the first terminal device, a transmission resource corresponding to the first message. This increases a success rate of sending the first message, thereby increasing the success rate of accessing the network device by the second terminal device.

In a possible implementation of the third aspect of embodiments of this application, the second request message includes a first indication, and the first indication indicates information that the first terminal device has a capability of providing a relay service; and/or the second request message includes a second indication, and the second indication indicates information about a quantity of terminal devices that can perform access through the first terminal device.

In this embodiment, the first terminal device may request the first configuration information from the network device based on capability indication information of the first terminal device. This may be specifically implemented by including the first indication and/or the second indication in a first request message sent to the network device. This provides a specific implementation in which the first terminal device sends the first request message to the network device, and improves feasibility of the solution, thereby improving implementation flexibility of the solution.

In a possible implementation of the third aspect of embodiments of this application, the first RRC message includes an RRC connection request message, an RRC reestablishment request message, or an RRC connection resume request message.

In this embodiment, the first RRC message may specifically include the RRC connection request message, the RRC reestablishment request message, the RRC connection resume request message, or another message that requests to set up the RRC connection between the second terminal device and the network device. This provides a plurality of specific implementations of the first RRC message, and improves feasibility of the solution, thereby improving implementation flexibility of the solution.

According to a fourth aspect of embodiments of this application, a communication method is provided. The method may be applied to a network device or a component (for example, a processor, a chip, or a chip system) of the network device for execution. In the method, the network device receives a second request message from a first terminal device, where the second request message requests first configuration information, the first configuration information is used to configure a first radio bearer between the first terminal device and the network device, and the first radio bearer includes a first signaling radio bearer SRB or a first data radio bearer DRB. Then, the network device sends the first configuration information to the first terminal device. Then, the network device receives, through the first radio bearer, a first message sent by the first terminal device, where the first message includes a first RRC message, and the first RRC message requests to set up an RRC connection between a second terminal device and the network device. The first terminal device may be a relay terminal device, and the second terminal device may be a remote terminal device. After receiving the second request message that is from the first terminal device and that requests the first configuration information, the network device sends the first configuration information to the first terminal device, and receives, through the first radio bearer configured by using the first configuration information, the first message that is from the first terminal device and that carries the first RRC message, where the first RRC message requests to set up the RRC connection between the second terminal device and the network device. That is, the network device sends the first configuration information based on the second request message of the first terminal device, and receives the first message from the first terminal device through the first radio bearer configured by using the first configuration information. Then, the network device may set up the RRC connection to the second terminal device based on the first message and perform communication. In this way, communication between the second terminal device and the network device is implemented in a user equipment-to-network relay (U2N) scenario. This increases a success rate of accessing the network device by the second terminal device, enhances a coverage capability of the network device, and improves an access capacity of the network device.

In a possible implementation of the fourth aspect of embodiments of this application, the first message further includes identification information of the second terminal device.

In this embodiment, the first message received by the network device from the first terminal device may further include the identification information of the second terminal device, to identify the first RRC message in the first message, so that the network device can determine that the first RRC message is associated with the second terminal device. This increases the success rate of accessing the network device by the second terminal device.

In a possible implementation of the fourth aspect of embodiments of this application, a logical channel configuration in the first configuration information includes logical channel group LCG information and/or SR information, and the LCG information and/or the SR information request/requests, from the network device, a resource for sending the first message.

In this embodiment, the first configuration information sent by the network device to the first terminal device includes the LCG information and/or the SR information in the logical channel configuration, where the LCG information and/or the SR information are/is used by the first terminal device to request, from the network device, the resource for sending the first message. In this way, after the first terminal device requests, from the network device based on the LCG information and/or the SR information, the resource for sending the first message, the network device may configure, for the first terminal device, a transmission resource corresponding to the first message. This increases a success rate of sending the first message, thereby increasing the success rate of accessing the network device by the second terminal device.

In a possible implementation of the fourth aspect of embodiments of this application, the second request message may include a first indication, and the first indication indicates information that the first terminal device has a capability of providing a relay service; and/or the second request message may include a second indication, and the second indication indicates information about a quantity of terminal devices that can perform access through the first terminal device.

In this embodiment, the first terminal device may request the first configuration information from the network device based on capability indication information of the first terminal device. In this case, a first request message received by the network device from the first terminal device carries the first indication and/or the second indication. Then, the network device may allocate a radio bearer to the first terminal device based on the first indication and/or the second indication, and send, to the first terminal device, the first configuration information used to configure the radio bearer. This provides a specific implementation in which the network device determines the first configuration information, and improves feasibility of the solution, thereby improving implementation flexibility of the solution.

In a possible implementation of the fourth aspect of embodiments of this application, the first RRC message includes an RRC connection request message, an RRC reestablishment request message, or an RRC connection resume request message.

In this embodiment, the first RRC message may specifically include the RRC connection request message, the RRC reestablishment request message, the RRC connection resume request message, or another message that requests to set up the RRC connection between the second terminal device and the network device. This provides a plurality of specific implementations of the first RRC message, and improves feasibility of the solution, thereby improving implementation flexibility of the solution.

According to a fifth aspect of embodiments of this application, a communication apparatus is provided. The communication apparatus may be a first terminal device or a component (for example, a processor, a chip, or a chip system) of the first terminal device. The communication apparatus includes a transceiver unit and a processing unit. The processing unit is configured to obtain first configuration information, where the first configuration information is used to configure a first radio bearer between the first terminal device and a network device, and the first radio bearer includes a first signaling radio bearer SRB or a first data radio bearer DRB. The transceiver unit is configured to receive a first radio resource control RRC message from a second terminal device, where the first RRC message requests to set up an RRC connection between the second terminal device and the network device. The transceiver unit is further configured to send a first message to the network device through the first radio bearer, where the first message includes the first RRC message and identification information of the second terminal device. The first terminal device may be a relay terminal device, and the second terminal device may be a remote terminal device. After the transceiver unit receives the first radio resource control RRC message from the second terminal device, the processing unit sends, through the transceiver unit, the first message to the network device through the first radio bearer configured by using the obtained first configuration information, where the first message includes the first RRC message that requests to set up the RRC connection between the second terminal device and the network device and the identification information of the second terminal device. That is, the transceiver unit forwards the first RRC message from the second terminal device by sending the first message to the network device through the first radio bearer, and includes, in the first message, the identification information that identifies the second terminal device. Then, the network device may set up the RRC connection to the second terminal device based on the first message and perform communication. In this way, communication between the second terminal device and the network device is implemented in a user equipment-to-network relay (U2N) scenario. This increases a success rate of accessing the network device by the second terminal device, enhances a coverage capability of the network device, and improves an access capacity of the network device.

In a possible implementation of the fifth aspect of embodiments of this application, the processing unit is specifically configured to: receive the first configuration information from the network device through the transceiver unit; or
obtain predefined first configuration information.

In a possible implementation of the fifth aspect of embodiments of this application,
the transceiver unit is further configured to send a first request message to the network device, where the first request message requests the first configuration information.

In a possible implementation of the fifth aspect of embodiments of this application, the first request message includes a first indication, and the first indication indicates information that the first terminal device has a capability of providing a relay service; and/or
the first request message includes a second indication, and the second indication indicates information about a quantity of terminal devices that can perform access through the first terminal device.

In a possible implementation of the fifth aspect of embodiments of this application, the first configuration information further includes second configuration information, the second configuration information is used to configure a second radio bearer between the first terminal device and the network device, and the second radio bearer includes a second SRB or a second DRB.

The transceiver unit is further configured to receive a second RRC message from a third terminal device, where the second RRC message requests to set up an RRC connection between the third terminal device and the network device.

The transceiver unit is further configured to send a second message to the network device through the second radio bearer, where the second message includes the second RRC message and identification information of the third terminal device.

In a possible implementation of the fifth aspect of embodiments of this application, a logical channel configuration in the first configuration information includes logical channel group LCG information and/or SR information, and the LCG information and/or the SR information request/requests, from the network device, a resource for sending the first message.

In a possible implementation of the fifth aspect of embodiments of this application, the first RRC message includes an RRC connection request message, an RRC reestablishment request message, or an RRC connection resume request message.

In the fifth aspect of embodiments of this application, composition modules of the communication apparatus may be further configured to perform the steps performed in the possible implementations of the first aspect. For details, refer to the first aspect. Details are not described herein again.

According to a sixth aspect of embodiments of this application, a communication apparatus is provided. The communication apparatus may be a network device or a component (for example, a processor, a chip, or a chip system) of the network device. The communication apparatus includes a receiving unit and a sending unit. The sending unit is configured to send first configuration information to a first terminal device, where the first configuration information is used to configure a first radio bearer between the first terminal device and the network device, and the first radio bearer includes a first signaling radio bearer SRB or a first data radio bearer DRB. The receiving unit is configured to receive, through the first radio bearer, a first message sent by the first terminal device, where the first message includes a first RRC message and identification information of a second terminal device, and the first RRC message requests to set up an RRC connection between the second terminal device and the network device. The first terminal device may be a relay terminal device, and the second terminal device may be a remote terminal device. The sending unit may configure the first radio bearer between the first terminal device and the network device by using the first configuration information sent to the first terminal device, and the receiving unit receives, through the first radio bearer, the first message sent by the first terminal device, where the first message includes the first RRC message that requests to set up the RRC connection between the second terminal device and the network device and the identification information of the second terminal device. That is, the sending unit forwards the first RRC message from the second terminal device by sending the first message to the network device through the first radio bearer, and includes, in the first message, the identification information that identifies the second terminal device. Then, the network device may set up the RRC connection to the second terminal device based on the first message and perform communication. In this way, communication between the second terminal device and the network device is implemented in a user equipment-to-network relay (U2N) scenario. This increases a success rate of accessing the network device by the second terminal device, enhances a coverage capability of the network device, and improves an access capacity of the network device.

In a possible implementation of the sixth aspect of embodiments of this application, the receiving unit is further configured to receive a first request message from the first terminal device, where the first request message requests the first configuration information.

In a possible implementation of the sixth aspect of embodiments of this application, the first request message includes a first indication, and the first indication indicates information that the first terminal device has a capability of providing a relay service; and/or
the first request message includes a second indication, and the second indication indicates information about a quantity of terminal devices that can perform access through the first terminal device.

In a possible implementation of the sixth aspect of embodiments of this application, the first configuration information further includes second configuration information, the second configuration information is used to configure a second radio bearer between the first terminal device and the network device, and the second radio bearer includes a second SRB or a second DRB.

The receiving unit is further configured to receive, through the second radio bearer, a second message sent by the first terminal device, where the second message includes a second RRC message and identification information of a third terminal device, and the second RRC message requests to set up an RRC connection between the third terminal device and the network device.

In a possible implementation of the sixth aspect of embodiments of this application, a logical channel configuration in the first configuration information includes logical channel group LCG information and/or SR information, and the LCG information and/or the SR information request/requests, from the network device, a resource for sending the first message.

In a possible implementation of the sixth aspect of embodiments of this application, the first RRC message includes an RRC connection request message, an RRC reestablishment request message, or an RRC connection resume request message.

In the sixth aspect of embodiments of this application, composition modules of the communication apparatus may be further configured to perform the steps performed in the possible implementations of the second aspect. For details, refer to the second aspect. Details are not described herein again.

According to a seventh aspect of embodiments of this application, a communication apparatus is provided. The communication apparatus may be a first terminal device or a component (for example, a processor, a chip, or a chip system) of the first terminal device. The communication apparatus includes a receiving unit and a sending unit. The receiving unit is configured to receive a first radio resource control RRC message from a second terminal device, where the first RRC message requests to set up an RRC connection between the second terminal device and a network device. The sending unit is configured to send a second request message to the network device, where the second request message requests first configuration information, the first configuration information is used to configure a first radio bearer between the first terminal device and the network device, the first radio bearer includes a first signaling radio bearer SRB or a first data radio bearer DRB, and the second request message includes identification information of the second terminal device. The receiving unit is further configured to receive the first configuration information from the network device. The sending unit is further configured to send a first message to the network device through the first radio bearer, where the first message includes the first RRC message. The first terminal device may be a relay terminal device, and the second terminal device may be a remote terminal device. After the receiving unit receives the first RRC message from the second terminal device, the sending unit sends, to the network device, the second request message that requests the first configuration information, where the first configuration information is used to configure the first radio bearer between the first terminal device and the network device. Then, after the receiving unit receives the first configuration information from the network device, the sending unit sends, to the network device through the first radio bearer, the first message that carries the first RRC message. That is, the sending unit forwards the first RRC message from the second terminal device by sending the first message to the network device through the first radio bearer configured by using the first configuration information sent by the network device. Then, the network device may set up the RRC connection to the second terminal device based on the first message and perform communication. In this way, communication between the second terminal device and the network device is implemented in a user equipment-to-network relay (U2N) scenario. This increases a success rate of accessing the network device by the second terminal device, enhances a coverage capability of the network device, and improves an access capacity of the network device.

In a possible implementation of the seventh aspect of embodiments of this application, the first message further includes the identification information of the second terminal device.

In a possible implementation of the seventh aspect of embodiments of this application, a logical channel configuration in the first configuration information includes logical channel group LCG information and/or SR information, and the LCG information and/or the SR information request/requests, from the network device, a resource for sending the first message.

In a possible implementation of the seventh aspect of embodiments of this application, the second request message includes a first indication, and the first indication indicates information that the first terminal device has a capability of providing a relay service; and/or
the second request message includes a second indication, and the second indication indicates information about a quantity of terminal devices that can perform access through the first terminal device.

In a possible implementation of the seventh aspect of embodiments of this application, the first RRC message includes an RRC connection request message, an RRC reestablishment request message, or an RRC connection resume request message.

In the seventh aspect of embodiments of this application, composition modules of the communication apparatus may be further configured to perform the steps performed in the possible implementations of the third aspect. For details, refer to the third aspect. Details are not described herein again.

According to an eighth aspect of embodiments of this application, a communication apparatus is provided. The communication apparatus may be a network device or a component (for example, a processor, a chip, or a chip system) of the network device. The communication apparatus includes a receiving unit and a sending unit. The receiving unit is configured to receive a second request message from a first terminal device, where the second request message requests first configuration information, the first configuration information is used to configure a first radio bearer between the first terminal device and the network device, and the first radio bearer includes a first signaling radio bearer SRB or a first data radio bearer DRB. The sending unit is configured to send the first configuration information to the first terminal device. The receiving unit is further configured to receive, through the first radio bearer, a first message sent by the first terminal device, where the first message includes a first RRC message, and the first RRC message requests to set up an RRC connection between a second terminal device and the network device. The first terminal device may be a relay terminal device, and the second terminal device may be a remote terminal device. After the receiving unit receives the second request message that is from the first terminal device and that requests the first configuration information, the sending unit sends the first configuration information to the first terminal device, and the receiving unit receives, through the first radio bearer configured by using the first configuration information, the first message that is from the first terminal device and that carries the first RRC message, where the first RRC message requests to set up the RRC connection between the second terminal device and the network device. That is, the sending unit sends the first configuration information based on the second request message of the first terminal device, and the receiving unit receives the first message from the first terminal device through the first radio bearer configured by using the first configuration information. Then, the network device may set up the RRC connection to the second terminal device based on the first message and perform communication. In this way, communication between the second terminal device and the network device is implemented in a user equipment-to-network relay (U2N) scenario. This increases a success rate of accessing the network device by the second terminal device, enhances a coverage capability of the network device, and improves an access capacity of the network device.

In a possible implementation of the eighth aspect of embodiments of this application, the first message further includes identification information of the second terminal device.

In a possible implementation of the eighth aspect of embodiments of this application, a logical channel configuration in the first configuration information includes logical channel group LCG information and/or SR information, and the LCG information and/or the SR information request/requests, from the network device, a resource for sending the first message.

In a possible implementation of the eighth aspect of embodiments of this application, the second request message includes a first indication, and the first indication indicates information that the first terminal device has a capability of providing a relay service; and/or
the second request message includes a second indication, and the second indication indicates information about a quantity of terminal devices that can perform access through the first terminal device.

In a possible implementation of the eighth aspect of embodiments of this application, the first RRC message includes an RRC connection request message, an RRC reestablishment request message, or an RRC connection resume request message.

In the eighth aspect of embodiments of this application, composition modules of the communication apparatus may be further configured to perform the steps performed in the possible implementations of the fourth aspect. For details, refer to the fourth aspect. Details are not described herein again.

According to a ninth aspect of embodiments of this application, a communication apparatus is provided. The communication apparatus includes at least one processor and an interface circuit. The interface circuit is configured to provide a program or instructions for the at least one processor. The at least one processor is configured to execute the program or the instructions, to enable the communication apparatus to implement the method according to any one of the first aspect or the possible implementations of the first aspect or the method according to any one of the third aspect or the possible implementations of the third aspect.

According to a tenth aspect of embodiments of this application, a communication apparatus is provided. The communication apparatus includes at least one processor and an interface circuit. The interface circuit is configured to provide a program or instructions for the at least one processor. The at least one processor is configured to execute the program or the instructions, to enable the communication apparatus to implement the method according to any one of the second aspect or the possible implementations of the second aspect or the method according to any one of the fourth aspect or the possible implementations of the fourth aspect.

According to an eleventh aspect of embodiments of this application, a computer-readable storage medium storing one or more computer-executable instructions is provided. When the computer-executable instructions are executed by a processor, the processor performs the method according to any one of the first aspect or the possible implementations of the first aspect or the method according to any one of the third aspect or the possible implementations of the third aspect.

According to a twelfth aspect of embodiments of this application, a computer-readable storage medium storing one or more computer-executable instructions is provided. When the computer-executable instructions are executed by a processor, the processor performs the method according to any one of the second aspect or the possible implementations of the second aspect or the method according to any one of the fourth aspect or the possible implementations of the fourth aspect.

According to a thirteenth aspect of embodiments of this application, a computer program product (or referred to as a computer program) storing one or more computers is provided. When the computer program product is executed by a processor, the processor performs the method according to any one of the first aspect or the possible implementations of the first aspect or the method according to any one of the third aspect or the possible implementations of the third aspect.

According to a fourteenth aspect of embodiments of this application, a computer program product (or referred to as a computer program) storing one or more computers is provided. When the computer program product is executed by a processor, the processor performs the method according to any one of the second aspect or the possible implementations of the second aspect or the method according to any one of the fourth aspect or the possible implementations of the fourth aspect.

According to a fifteenth aspect of embodiments of this application, a chip system is provided. The chip system includes at least one processor, configured to support a network device in implementing functions in any one of the first aspect or the possible implementations of the first aspect or any one of the third aspect or the possible implementations of the third aspect. In a possible design, the chip system may further include a memory. The memory is configured to store program instructions and data that are necessary for a terminal device. The chip system may include a chip, or may include a chip and another discrete component. Optionally, the chip system further includes an interface circuit, and the interface circuit provides the program instructions and/or the data for the at least one processor.

According to a sixteenth aspect of embodiments of this application, a chip system is provided. The chip system includes at least one processor, configured to support a terminal device in implementing functions in any one of the second aspect or the possible implementations of the second aspect or any one of the fourth aspect or the possible implementations of the fourth aspect. In a possible design, the chip system may further include a memory. The memory is configured to store program instructions and data that are necessary for a network device. The chip system may include a chip, or may include a chip and another discrete component. Optionally, the chip system further includes an interface circuit, and the interface circuit provides the program instructions and/or the data for the at least one processor.

According to a seventeenth aspect of embodiments of this application, a communication system is provided. The communication system includes the communication apparatus in the fifth aspect and the communication apparatus in the sixth aspect, includes the communication apparatus in the seventh aspect and the communication apparatus in the eighth aspect, or includes the communication apparatus in the ninth aspect and the communication apparatus in the tenth aspect.

For technical effects brought by any one of the fifth aspect, the seventh aspect, the ninth aspect, the eleventh aspect, the thirteenth aspect, the fifteenth aspect, and the seventeenth aspect or the possible implementations thereof, refer to technical effects brought by the first aspect or the different possible implementations of the first aspect, or refer to technical effects brought by the third aspect or the different possible implementations of the third aspect. Details are not described herein again.

For technical effects brought by any one of the sixth aspect, the eighth aspect, the tenth aspect, the twelfth aspect, the fourteenth aspect, the sixteenth aspect, and the seventeenth aspect or the possible implementations thereof, refer to technical effects brought by the second aspect or the different possible implementations of the second aspect, or refer to technical effects brought by the fourth aspect or the different possible implementations of the fourth aspect. Details are not described herein again.

It can be learned from the foregoing technical solutions that embodiments of this application have the following advantages: The first terminal device obtains the first configuration information, where the first configuration information is used to configure the first radio bearer between the first terminal device and the network device, and the first radio bearer includes the first signaling radio bearer SRB or the first data radio bearer DRB. Then, the first terminal device receives the first radio resource control RRC message from the second terminal device, where the first RRC message requests to set up the RRC connection between the second terminal device and the network device. Then, the first terminal device sends the first message to the network device through the first radio bearer, where the first message includes the first RRC message and the identification information of the second terminal device. The first terminal device may be a relay terminal device, and the second terminal device may be a remote terminal device. After receiving the first radio resource control RRC message from the second terminal device, the first terminal device sends the first message to the network device through the first radio bearer configured by using the obtained first configuration information, where the first message includes the first RRC message that requests to set up the RRC connection between the second terminal device and the network device and the identification information of the second terminal device. That is, the first terminal device forwards the first RRC message from the second terminal device by sending the first message to the network device through the first radio bearer, and includes, in the first message, the identification information that identifies the second terminal device. Then, the network device may set up the RRC connection to the second terminal device based on the first message and perform communication. In this way, communication between the second terminal device and the network device is implemented in the user equipment-to-network relay (U2N) scenario. This increases the success rate of accessing the network device by the second terminal device, enhances the coverage capability of the network device, and improves the access capacity of the network device.

### BRIEF DESCRIPTION OF DRAWINGS

FIG. 1 is a schematic diagram of a network framework according to an embodiment of this application;
FIG. 2 is a schematic diagram of an embodiment of a communication method according to an embodiment of this application;
FIG. 3 is another schematic diagram of an embodiment of a communication method according to an embodiment of this application;
FIG. 4 is another schematic diagram of an embodiment of a communication method according to an embodiment of this application;
FIG. 5 is another schematic diagram of an embodiment of a communication method according to an embodiment of this application;
FIG. 6 is another schematic diagram of an embodiment of a communication method according to an embodiment of this application;
FIG. 7 is another schematic diagram of an embodiment of a communication method according to an embodiment of this application;
FIG. 8 is a schematic diagram of an embodiment of a communication apparatus according to an embodiment of this application;
FIG. 9 is another schematic diagram of an embodiment of a communication apparatus according to an embodiment of this application;
FIG. 10 is another schematic diagram of an embodiment of a communication apparatus according to an embodiment of this application;
FIG. 11 is another schematic diagram of an embodiment of a communication apparatus according to an embodiment of this application;
FIG. 12 is another schematic diagram of an embodiment of a communication apparatus according to an embodiment of this application; and
FIG. 13 is another schematic diagram of an embodiment of a communication apparatus according to an embodiment of this application.

### DESCRIPTION OF EMBODIMENTS

The following describes technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.
(1) A terminal device (namely, a user equipment) may be a wireless terminal device that can receive scheduling and indication information from a network device. The wireless terminal device may be a device that provides a user with voice and/or data connectivity, a handheld device having a wireless connection function, or another processing device connected to a wireless modem.

The terminal device may communicate with one or more core networks or the internet through a radio access network (radio access network, RAN). The terminal device may be a mobile terminal device, for example, a mobile phone (or referred to as a "cellular" phone or a mobile phone (mobile phone)), a computer, or a data card. For example, the terminal device may be a portable, pocket-sized, handheld, computer built-in, or in-vehicle mobile apparatus that exchanges voice and/or data with the radio access network. For example, the terminal device may be a device such as a personal communications service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), a customer premises equipment (customer premises equipment, CPE), a terminal (terminal), a user equipment (user equipment, UE), a mobile terminal (mobile terminal, MT), or the like. The terminal device may alternatively be a wearable device, a terminal device in a next-generation communication system such as a 5G communication system, a terminal device in a future evolved public land mobile network (public land mobile network, PLMN), or the like.

In embodiments of this application, an apparatus configured to implement a function of the terminal device may be a terminal device, or may be an apparatus, for example, a chip system, that can support the terminal device in implementing the function. The apparatus may be installed in the terminal device. In the technical solutions provided in embodiments of this application, the technical solutions provided in embodiments of this application are described by using an example in which the apparatus configured to implement the function of the terminal device is the terminal device.

(2) The network device may be a device in a wireless network. For example, the network device may be a radio access network (radio access network, RAN) node (or device), or may be referred to as a base station, through which the terminal device accesses the wireless network. Currently, for example, the RAN device is a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP). In addition, in a network structure, the network device may include a central unit (centralized unit, CU) node, a distributed unit (distributed unit, DU) node, or a RAN device including a CU node and a DU node.

The network device can send configuration information (for example, carried in a scheduling message and/or an indication message) to the terminal device, and the terminal device further performs network configuration based on the configuration information, so that network configurations of the network device and the terminal device are aligned. Alternatively, network configurations of the network device and the terminal device are aligned by presetting the network configuration of the network device and the network configuration of the terminal device. Specifically, "aligned" means that when there is an interaction message between the network device and the terminal device, the network device and the terminal device have a consistent understanding of a carrier frequency for sending and receiving the interaction message, determining of an interaction message type, a meaning of field information carried in the interaction message, or another configuration of the interaction message.

In addition, in another possible case, the network device may be another apparatus that provides a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

(3) The terms "system" and "network" may be used interchangeably in embodiments of this application. "At least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually represents an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not intended to limit an order, a time sequence, priorities, or importance of the plurality of objects.

(4) An SRB 0 is a bearer used to transmit connection setup related messages. The transmitted messages include an RRC connection setup request message, an RRC connection resume request message, an RRC connection reestablishment request message, an RRC system message request message, and the like that are sent by the terminal device to the network device, and an RRC connection setup message, an RRC connection reject message, and the like that are returned by a base station to a terminal. An SRB x is an x^{th} signaling radio bearer that is between a relay UE and the network device and that is introduced into this application. The bearer is used to transmit an SRB 0-related message of a remote UE.

The 3rd generation partnership project (the third generation partnership project, 3GPP) international standardization organization enhances a device-to-device (Device-to-Device, D2D) technology in long term evolution (Long Term Evolution, LTE) R13, supports unicast communication (one-to-one), and supports user equipment-to-network relay (user equipment-to-network relay, U2N) to improve coverage.

With development of technologies, introduction of D2D communication and cooperative communication between user equipments UEs into a 5th generation (5th generation, 5G) system new radio (new radio, NR) technology starts to be discussed in the 3GPP standard. In addition to being used for public safety, D2D communication and cooperative communication between UEs in 5G NR mainly consider improvement of network system performance, for example, coverage enhancement and capacity improvement.

User equipment-to-network relay (user equipment-to-network relay, U2N) refers to a communication technology in which a user equipment (remote UE) accesses a network through another user equipment (relay UE), and may be applied to a scenario in which the remote UE has a poor coverage signal or is located outside network coverage, to implement network coverage enhancement and capacity improvement. The user equipment may also be referred to as a terminal device.

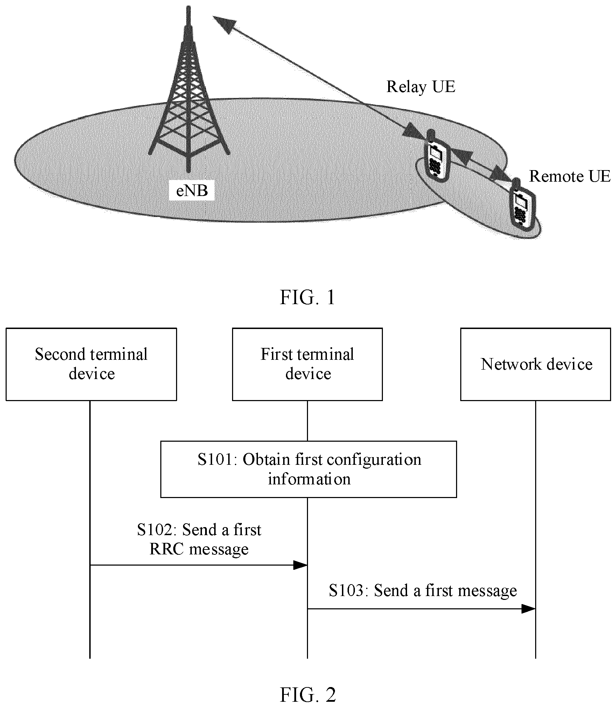

For example, an eNB is a network device, and a relay terminal device (Relay UE) and a remote terminal device (Remote UE) are terminal devices. In FIG. 1, cooperative communication between the UEs can improve indoor user experience. An operator may deploy a terminal device relay UE. The relay UE has a strong capability, for example, has more receive and transmit antennas. In this case, the relay UE may assist another terminal, for example, the remote UE, in forwarding data, so that coverage is enhanced. The relay UE and the remote UE may communicate with each other over a sidelink (sidelink).

A communication system shown in FIG. 1 may be applied to a communication scenario of a layer 2 (L2) U2N relay (relay) architecture. The remote UE can set up an end-to-end radio resource control (radio resource control, RRC) connection to the eNB. The relay UE identifies a message of the remote UE/eNB at an L2 (an adaptation layer below a packet data convergence protocol (packet data convergence protocol, PDCP) layer), and assists in forwarding the message to a base station/remote UE. In this architecture, when the remote UE wants to send an RRC message (for example, an RRC connection request message, an RRC reestablishment request message, or an RRC connection resume request message) to the eNB through the relay UE, there is no bearer that is between the relay UE and the base station and that is used to forward the message of the remote UE. In other words, in a conventional technology, after setting up an RRC connection to a network side device, the UE may communicate with the network side device through the RRC connection. Because communication between the remote UE and the network side device is implemented by using a relay service provided by the relay UE, before the remote UE communicates with the network side device, the relay UE needs to forward a message related to setup of the RRC connection between the remote UE and the network side device. However, currently, there is no bearer that is between the relay UE and the network side device and that is used to forward the message. As a result, the RRC connection used for communication cannot be set up between the remote UE and the network device. Therefore, how to implement communication between the remote UE and the network device through the relay UE is an urgent problem to be resolved.

In another similar application scenario, for example, in a scenario in which an integrated access and backhaul (integrated access and backhaul, IAB) technology is used, an IAB node (Node) also needs to assist a UE or an IAB donor (donor) in forwarding an SRB 0-related message. A solution is as follows: A donor central unit (central unit, CU) configures a default backhaul radio link control channel (backhaul radio link control Channel, BH RLC Channel) for each IAB node, and the IAB node forwards the SRB 0-related message of the UE through the default BH RLC channel. For a user plane message of the UE, another solution is as follows: When a new UE accesses a core network, the core network triggers a donor CU to configure a dedicated BH RLC channel for each IAB node, and the IAB node forwards the user plane message of the UE through the dedicated BH RLC channel. However, in the communication scenario in which the IAB technology is applied, because the IAB node is mainly used for routing, the IAB node does not need to carry additional indication information when forwarding the message. As a result, the relay UE/base station cannot identify the remote UE by using the IAB related technology.

In conclusion, resolving a problem of how the relay UE forwards the SRB 0-related message of the remote UE specifically includes resolving a problem of how to configure a bearer that is between the base station and the relay UE and that is used to transmit the message, and a problem of how to configure a mapping relationship between the bearer and a bearer that is used to transmit the message and that is on a PCS interface (namely, a communication interface between the relay UE and the remote UE).

To resolve the foregoing problem, embodiments of this application provide a communication method and a related device, to implement communication between a second terminal device and a network device in a user equipment-to-network relay (U2N) scenario. This increases a success rate of accessing the network device by the second terminal device, enhances a coverage capability of the network device, and improves an access capacity of the network device.

Refer to FIG. 2. An embodiment of this application provides a communication method. The method includes the following steps.

S101: A first terminal device obtains first configuration information.

In this embodiment, the first terminal device obtains the first configuration information. The first configuration information is used to configure a first radio bearer between the first terminal device and a network device. A type of the first radio bearer may be a signaling radio bearer (signaling radio bearer, SRB) or a data radio bearer (Data Radio Bearer, DRB). That is, the first radio bearer may include a first SRB or a first DRB.

In a possible implementation, the first terminal device may be a relay terminal device, namely, a terminal device that has a capability of providing a relay service. In step S101, a process in which the first terminal device obtains the first configuration information may specifically include: The first terminal device receives the first configuration information from the network device; or obtains predefined first configuration information. To be specific, the first terminal device may obtain the first configuration information by receiving the first configuration information from the network device, or may obtain the first configuration information based on the predefined first configuration information, for example, based on the first configuration information predefined in a storage module of the first terminal device, for example, configured in a subscriber identity module (Subscriber Identity Module, SIM), a universal subscriber identity module (Universal Subscriber Identity Module, USIM), an IP multimedia services identity module (IP Multi Media Service Identity Module, ISIM for short), an embedded SIM card (embedded SIM, eSIM), or other modules such as electronic signature authentication and an electronic wallet in the terminal device. That is, the first terminal device may obtain the first configuration information by using a configuration of the network device or a predefined configuration, to flexibly configure the first configuration information and improve feasibility of the solution.

Specifically, in a manner in which the first terminal device obtains the first configuration information by receiving the first configuration information from the network device in step S 10 1, before receiving the first configuration information, the first terminal device may send, to the network device, a first request message that requests the first configuration information. Correspondingly, before step S101, that is, before sending the first configuration information to the first terminal device, the network device may receive, from the first terminal device, the first request message that requests the first configuration information. In this way, the network device may trigger step S101 based on the first request message, to send the first configuration information to the first terminal device. Before step S101, after the first terminal device sets up an RRC connection to the network device, that is, when the first terminal device is in an RRC connected state, the first terminal device may perform step S101 to send the first request message to the network device. Then, in a process in which the network device sends the first configuration information to the first terminal device in step S101, when the first terminal device is in the RRC connected state, the first terminal device may receive, in a unicast/multicast/broadcast manner, the first configuration information sent by the network device; or when the first terminal device is in an RRC inactive (inactive) state or an RRC idle (idle) state, the first terminal device may receive, in a multicast/broadcast manner, the first configuration information sent by the network device. This is not specifically limited herein.

The first request message may include a first indication, and the first indication indicates information that the first terminal device has a capability of providing a relay service; and/or the first request message may include a second indication, and the second indication indicates information about a quantity of terminal devices that can perform access through the first terminal device. In other words, before step S 101, the first terminal device may request the first configuration information from the network device based on capability indication information of the first terminal device. This may be specifically implemented by including the first indication and/or the second indication in the first request message sent to the network device. Correspondingly, after receiving the first request message that carries the first indication and/or the second indication and that is sent by the first terminal device, the network device may determine that the first terminal device has capability information about providing the relay service, so that the network device may allocate the first radio bearer to the first terminal device based on the first indication and/or the second indication, and send, to the first terminal device, the first configuration information used to configure the first radio bearer. In addition, the first indication and/or the second indication may alternatively be carried in another message sent by the first terminal device to the network device. This is not specifically limited herein.

For example, the first indication may be implemented by using 1-bit indication information or multi-bit indication information. Herein, an example in which the first indication is implemented by using the 1-bit indication information is used for description. When the 1-bit indication information sent by the first terminal device to the network device is "0", it indicates that the first terminal device does not have the capability of providing the relay service. When the 1-bit indication information sent by the first terminal device to the network device is " 1", it indicates that the first terminal device has the capability of providing the relay service. The second indication information may be implemented by using value indication information or capability level indication information (where a higher level indicates that a larger quantity of remote terminal devices can perform access), or may be implemented in another manner. Herein, an example in which the second indication is implemented by using the value indication information is used for description. The value indication information may be "n", indicating that the quantity of remote terminal devices that can perform access through the first terminal device is n, where n is a natural number.

In a possible implementation, the first configuration information further includes second configuration information, the second configuration information is used to configure a second radio bearer between the first terminal device and the network device, and the second radio bearer includes a second SRB or a second DRB. The first radio bearer may be different from the second radio bearer. Therefore, when the first terminal device needs to transmit RRC messages from a plurality of remote terminal devices through a radio bearer between the first terminal device and the network device, the first terminal device may perform transmission through the first radio bearer for a plurality of times, that is, forward the messages of the plurality of remote terminal devices by subsequently reusing the first radio bearer for a plurality of times. This improves utilization of the first radio bearer, and reduces signaling consumption between the first terminal device and the network device. Alternatively, the first terminal device may separately perform transmission through the first radio bearer and the second radio bearer, that is, perform concurrent transmission through different radio bearers, so that the plurality of remote terminal devices can quickly access the network device. This improves communication efficiency.

In a possible implementation, a logical channel configuration in the first configuration information includes logical channel group (Logical Channel Group, LCG) information and/or schedule request (Schedule Request, SR) information, and the LCG information and/or the SR information request/requests, from the network device, a resource for sending a first message (and/or a second message).

S102: A second terminal device sends a first RRC message to the first terminal device.

In this embodiment, the second terminal device sends the first RRC message to the first terminal device. Correspondingly, in step S102, the first terminal device receives the first RRC message from the second terminal device. The first RRC message requests to set up an RRC connection between the second terminal device and the network device.

In a possible implementation, the second terminal device may be a remote terminal device. Before step S 102, the second terminal device may set up a connection to the first terminal device. To be specific, the first terminal device may communicate with the second terminal device over a sidelink (sidelink) between the first terminal device and the second terminal device. In step S102, the first RRC message sent by the second terminal device to the first terminal device may specifically include an RRC connection request message, an RRC reestablishment request message, an RRC connection resume request message, or another message that requests to set up the RRC connection between the second terminal device and the network device. This provides a plurality of specific implementations of the first RRC message, so that this embodiment is applicable to communication systems of different network standards.

S 103: The first terminal device sends the first message to the network device.

In this embodiment, the first terminal device sends the first message to the network device through the first radio bearer configured by using the first configuration information obtained in step S101. Correspondingly, in step S103, the network device receives the first message sent by the first terminal device. The first message includes the first RRC message sent by the second terminal device in step S102 and identification information of the second terminal device.

In a possible implementation, after the first terminal device receives the first RRC message of the second terminal device in step S 102, if the first terminal device is in the idle (idle) state or the inactive (inactive) state, the first terminal device may set up the RRC connection to the network device, to enter the RRC connected state; and then perform step S103 after entering the RRC connected state, to send the first message to the network device, so that the network device identifies the first terminal device and an association relationship between the first terminal device and the second terminal device. In this way, contexts of the first terminal device and the second terminal device are further maintained. That is, after receiving the first message in step S103, the network device may further implement a processing process of the first RRC message based on the first message.

After step S 103, the network device may determine, based on the first RRC message in the first message and/or the identification information of the second terminal device, whether to set up the RRC connection to the second terminal device. In addition, after step S103, the network device may send a feedback message of the first message to the first terminal device through the first radio bearer. Details are as follows:
(1) When the network device determines to set up the RRC connection to the second terminal device, the feedback message, of the first message, sent by the network device to the first terminal device through the first radio bearer may be an RRC setup (RRC setup) message, an RRC resume (RRC Resume) message, an RRC reestablishment (RRC Reestablishment) message, or the like. Then, the first terminal device forwards the feedback message to the second terminal device. Herein, an example in which the feedback message is the RRC setup message is used for description. The RRC setup message may carry a bearer configuration message of an SRB 1 of the second terminal device. The bearer configuration message of the SRB 1 is used to ensure that a subsequent signaling message for the second terminal device can be transmitted to the network device through the SRB 1. Specifically, the SRB 1 includes an RLC bearer configuration (on a PCS interface) between the second terminal device and the first terminal device, and an end-to-end packet data convergence protocol PDCP configuration (on a Uu interface of the second terminal device) between the second terminal device and the network device. Specifically, the network device may configure the end-to-end PDCP configuration between the second terminal device and the network device only for the SRB 1. In this case, the second terminal device can use an existing channel over the PCS, and then the first terminal device also uses the existing channel for forwarding. In addition, the network device may configure the end-to-end PDCP configuration between the second terminal device and the network device, the RLC bearer configuration between the second terminal device and the first terminal device, and the like for the SRB 1. In this case, the network device further needs to send the RLC bearer configuration between the second terminal device and the first terminal device to the first terminal device, and send indication information to the first terminal device. The indication information indicates how to forward, over the Uu interface, a message associated with the second terminal device (an RLC bearer configuration on a Uu interface of the first terminal device).
(2) When the network device determines not to set up the RRC connection to the second terminal device, the network device may ignore the first message in step S 103 and make no response, or the network device may send, to the first terminal device after step S103, a feedback message indicating that the network device determines not to set up the RRC connection to the second terminal device. The feedback message may be specifically a radio resource control connection reject (Radio Resource Control Connection Reject, RRC Connection Reject) message. Then, the first terminal device may perform corresponding feedback message forwarding, that is, forward the feedback message to the second terminal device, or may ignore the feedback message. This is not specifically limited herein.

In a possible implementation, the identification information of the second terminal device may be implemented in a plurality of implementations, for example, may be an international mobile equipment identity (International Mobile Equipment Identity, IMEI), a mobile equipment identifier (Mobile Equipment Identifier, MEID), a cell radio network temporary identifier (Cell radio network temporary identifier, C-RNTI), an L2 ID, a 5G-system architecture evolution temporary mobile station identifier (5G-System architecture evolution temporary mobile station identifier, 5G-S-TMSI), or other identification information that can identify the second terminal device. This is not limited herein.

In a possible implementation, the logical channel configuration in the first configuration information obtained by the first terminal device in step S101 includes the logical channel group LCG information and/or the schedule request SR information, and the LCG information and/or the SR information request/requests, from the network device, the resource for sending the first message. In this case, in an execution process of step S103, when determining that no resource is available, the first terminal device sends, to the network device based on the LCG information and/or the SR information, a request message used to apply for a resource. Specifically, the first terminal device may send a buffer status report (Buffer Status Report, BSR) to the network device by using the LCG information, and/or the first terminal device may send an SR message to the network device by using the SR information, to request, from the network device, the resource for sending the first message. Then, when the first terminal device determines that there is an available resource, the first terminal device performs a process of sending the first message to the network device in step S103. In this way, the first terminal device may determine, depending on whether there is an available resource, to send, to the network device, the request message used to apply for the resource. This can reduce signaling consumption of the first terminal device, avoid a failure to send the first message, and increase a success rate of accessing the network device by the second terminal device.

In this embodiment, the first terminal device obtains the first configuration information, where the first configuration information is used to configure the first radio bearer between the first terminal device and the network device, and the first radio bearer includes the first signaling radio bearer SRB or the first data radio bearer DRB. Then, the first terminal device receives the first radio resource control RRC message from the second terminal device, where the first RRC message requests to set up the RRC connection between the second terminal device and the network device. Then, the first terminal device sends the first message to the network device through the first radio bearer, where the first message includes the first RRC message and the identification information of the second terminal device. The first terminal device may be a relay terminal device, and the second terminal device may be a remote terminal device. After receiving the first radio resource control RRC message from the second terminal device, the first terminal device sends the first message to the network device through the first radio bearer configured by using the obtained first configuration information, where the first message includes the first RRC message that requests to set up the RRC connection between the second terminal device and the network device and the identification information of the second terminal device. That is, the first terminal device forwards the first RRC message from the second terminal device by sending the first message to the network device through the first radio bearer, and includes, in the first message, the identification information that identifies the second terminal device. Then, the network device may set up the RRC connection to the second terminal device based on the first message and perform communication. In this way, communication between the second terminal device and the network device is implemented in the user equipment-to-network relay (U2N) scenario. This increases the success rate of accessing the network device by the second terminal device, enhances a coverage capability of the network device, and improves an access capacity of the network device.

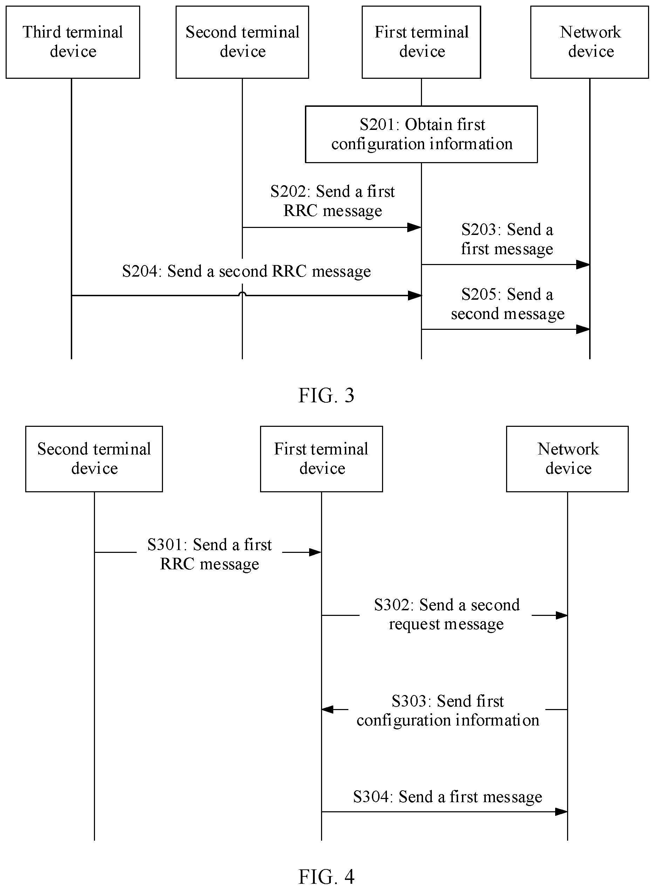

Refer to FIG. 3. An embodiment of this application provides another communication method. The method includes the following steps.

S201: A first terminal device obtains first configuration information.

In this embodiment, the first terminal device obtains the first configuration information. The first configuration information is used to configure a first radio bearer between the first terminal device and a network device. A type of the first radio bearer may be a signaling radio bearer (signaling radio bearer, SRB) or a data radio bearer (Data Radio Bearer, DRB). That is, the first radio bearer may include a first SRB or a first DRB.

In a possible implementation, the first configuration information further includes second configuration information, the second configuration information is used to configure a second radio bearer between the first terminal device and the network device, and the second radio bearer includes a second SRB or a second DRB. The first radio bearer may be different from the second radio bearer. In addition, the first radio bearer and/or the second radio bearer may be one or a group of public radio bearers. In other words, the first radio bearer and/or the second radio bearer may be used to carry messages of a plurality of different remote terminal devices. Therefore, when the first terminal device needs to transmit RRC messages from the plurality of remote terminal devices through a radio bearer between the first terminal device and the network device, the first terminal device may perform transmission through the first radio bearer for a plurality of times, that is, forward the messages of the plurality of remote terminal devices by subsequently reusing the first radio bearer for a plurality of times. This improves utilization of the first radio bearer, and reduces signaling consumption between the first terminal device and the network device. Alternatively, the first terminal device may separately perform transmission through the first radio bearer and the second radio bearer, that is, perform concurrent transmission through different radio bearers, so that the plurality of remote terminal devices can quickly access the network device. This improves communication efficiency.

S202: A second terminal device sends a first RRC message to the first terminal device.

In this embodiment, the second terminal device sends the first RRC message to the first terminal device. Correspondingly, in step S202, the first terminal device receives the first RRC message from the second terminal device. The first RRC message requests to set up an RRC connection between the second terminal device and the network device.

S203: The first terminal device sends the first message to the network device.

In this embodiment, the first terminal device sends the first message to the network device through the first radio bearer configured by using the first configuration information obtained in step S201. Correspondingly, in step S203, the network device receives the first message sent by the first terminal device. The first message includes the first RRC message sent by the second terminal device in step 5202 and identification information of the second terminal device.

In this embodiment, an implementation process of step S201 to step S203 is similar to an implementation process of step S 10 1 to step S103 in FIG. 2. Details are not described herein again.

S204: A third terminal device sends a second RRC message to the first terminal device.

In this embodiment, the third terminal device sends the second RRC message to the first terminal device. Correspondingly, in step S204, the first terminal device receives the second RRC message from the third terminal device. The second RRC message requests to set up an RRC connection between the third terminal device and the network device. The third terminal device may be a remote terminal device different from the second terminal device.

In a possible implementation, the third terminal device may be a remote terminal device. Before step S204, the third terminal device may set up a connection to the first terminal device. To be specific, the first terminal device may communicate with the third terminal device over a sidelink (sidelink) between the first terminal device and the third terminal device. In step S204, the first RRC message sent by the third terminal device to the first terminal device may specifically include an RRC connection request message, an RRC reestablishment request message, an RRC connection resume request message, or another message that requests to set up the RRC connection between the third terminal device and the network device. This provides a plurality of specific implementations of the first RRC message, so that this embodiment is applicable to communication systems of different network standards.

S205: The first terminal device sends a second message to the network device.

In this embodiment, the first terminal device sends the second message to the network device through the first radio bearer and/or the second radio bearer configured by using the first configuration information obtained in step S201. Correspondingly, in step S205, the network device receives the second message sent by the first terminal device. The second message includes the second RRC message sent by the third terminal device in step S204 and identification information of the third terminal device.

In a possible implementation, it may be learned from step S201 that the first configuration information is used to configure the first radio bearer between the network device and the first terminal device, and the first configuration information may be further used to configure the second radio bearer between the network device and the first terminal device. That is, the first terminal device may configure the plurality of radio bearers (including the first radio bearer and the second radio bearer) based on the first configuration information. Specifically, in an implementation process of step S205, the third terminal device may be the remote terminal device different from the second terminal device. The first terminal device may send the second message to the network device by reusing the first radio bearer, that is, forward the messages of the plurality of remote terminal devices by subsequently reusing the first radio bearer for a plurality of times. This improves utilization of the first radio bearer, and reduces signaling consumption between the first terminal device and the network device. In addition, the first terminal device may alternatively send the second message to the network device through the second radio bearer different from the first radio bearer, that is, perform concurrent transmission through different radio bearers, so that the plurality of remote terminal devices can quickly access the network device. This improves communication efficiency.

In addition, the first terminal device determines, according to a preset rule, that a radio bearer corresponding to the second terminal device is the first radio bearer; and/or the first terminal device determines, according to a preset rule, that a radio bearer corresponding to the third terminal device is the second radio bearer. The first configuration information may be used to configure the plurality of radio bearers (including the first radio bearer and the second radio bearer). After separately receiving the RRC messages that are sent by the plurality of remote terminal devices (the second terminal device and the third terminal device) and that request to set up the RRC connections between the plurality of terminal devices and the network device, the first terminal device may separately determine the corresponding radio bearers for the plurality of terminal devices according to the preset rule (which is separately performed in step S203 and step S205). The preset rule may be separately determining the corresponding radio bearers for the plurality of remote terminal devices based on device priorities or device type information of the plurality of remote terminal devices, depending on whether the radio bearers of the plurality of remote terminal devices are idle, or according to another rule. This provides a specific implementation in which the first terminal device determines the corresponding radio bearers for the plurality of terminal devices.

In a possible implementation, after the first terminal device receives the second RRC message of the third terminal device in step S204, if the first terminal device is in an idle (idle) state or an inactive (inactive) state, the first terminal device may set up the RRC connection to the network device, to enter an RRC connected state; and then perform step S205 after entering the RRC connected state, to send the second message to the network device, so that the network device identifies the first terminal device and an association relationship between the first terminal device and the third terminal device. In this way, contexts of the first terminal device and the third terminal device are further maintained. That is, after receiving the second message in step S205, the network device may further implement a processing process of the second RRC message based on the second message.

After step S205, the network device may determine, based on the second RRC message in the second message and/or the identification information of the third terminal device, whether to set up the RRC connection to the third terminal device. In addition, after step S205, the network device may send a feedback message of the second message to the first terminal device through the first radio bearer and/or the second radio bearer. For a specific process in which the network device and the first terminal device process the second message and the feedback message corresponding to the second message after step S205, refer to the foregoing process in which the network device and the first terminal device process the first message and the feedback message corresponding to the first message after step S103 in FIG. 2. Details are not described herein again.

In a possible implementation, the identification information of the third terminal device may be implemented in a plurality of implementations, for example, may be an international mobile equipment identity (International Mobile Equipment Identity, IMEI), a mobile equipment identifier (Mobile Equipment Identifier, MEID), a cell radio network temporary identifier (Cell radio network temporary identifier, C-RNTI), an L2 ID, a 5G-system architecture evolution temporary mobile station identifier (5G-System architecture evolution temporary mobile station identifier, 5G-S-TMSI), or other identification information that can identify the third terminal device. This is not limited herein.

In a possible implementation, a logical channel configuration in the first configuration information obtained by the first terminal device in step S201 includes logical channel group LCG information and/or schedule request SR information, and the LCG information and/or the SR information request/requests, from the network device, a resource for sending the second message. In this case, in an execution process of step S103, when determining that no resource is available, the first terminal device sends, to the network device based on the LCG information and/or the SR information, a request message used to apply for a resource. Specifically, the first terminal device may send a buffer status report (Buffer Status Report, BSR) to the network device by using the LCG information, and/or the first terminal device may send an SR message to the network device by using the SR information, to request, from the network device, the resource for sending the second message. Then, when the first terminal device determines that there is an available resource, the first terminal device performs a process of sending the second message to the network device in step S205. In this way, the first terminal device may determine, depending on whether there is an available resource, to send, to the network device, the request message used to apply for the resource. This can reduce signaling consumption of the first terminal device, avoid a failure to send the first message, and increase a success rate of accessing the network device by the third terminal device.

Compared with the embodiment shown in FIG. 2, in this embodiment, the first terminal device may configure the plurality of different radio bearers by using the first configuration information, to separately send the RRC messages of the different remote UEs, and carry the identification information of the corresponding remote UEs. In this way, communication between the plurality of terminal devices and the network device is implemented in a user equipment-to-network relay (U2N) scenario. This increases a success rate of accessing the network device by the plurality of terminal devices, further enhances a coverage capability of the network device, and further improves an access capacity of the network device.

Refer to FIG. 4. An embodiment of this application provides another communication method. The method includes the following steps.

S301: A second terminal device sends a first RRC message to a first terminal device.

In this embodiment, the second terminal device sends the first RRC message to the first terminal device. Correspondingly, in step S301, the first terminal device receives the first RRC message sent by the second terminal device. The first RRC message requests to set up an RRC connection between the second terminal device and a network device.

In a possible implementation, the first terminal device may be a relay terminal device, namely, a terminal device that has a capability of providing a relay service. The second terminal device may be a remote terminal device, namely, a terminal device that accepts the relay service. Before step S301, the second terminal device may set up a connection to the first terminal device. To be specific, the first terminal device may communicate with the second terminal device over a sidelink (sidelink) between the first terminal device and the second terminal device. In step S301, the first RRC message sent by the second terminal device to the first terminal device may specifically include an RRC connection request message, an RRC reestablishment request message, an RRC connection resume request message, or another message that requests to set up the RRC connection between the second terminal device and the network device. This provides a plurality of specific implementations of the first RRC message, so that this embodiment is applicable to communication systems of different network standards.

S302: The first terminal device sends a second request message to the network device.

In this embodiment, the first terminal device sends the second request message to the network device. Correspondingly, the network device receives, in step S302, the second request message sent by the first terminal device. The second request message includes identification information of the second terminal device. The second request message requests first configuration information, and the first configuration information is used to configure a first radio bearer between the first terminal device and the network device.

In a possible implementation, the identification information of the second terminal device may be implemented in a plurality of implementations, for example, may be an international mobile equipment identity (International Mobile Equipment Identity, IMEI), a mobile equipment identifier (Mobile Equipment Identifier, MEID), a cell radio network temporary identifier (Cell radio network temporary identifier, C-RNTI), an L2 ID, a 5G-system architecture evolution temporary mobile station identifier (5G-System architecture evolution temporary mobile station identifier, 5G-S-TMSI), or other identification information that can identify the second terminal device. This is not limited herein.

In a possible implementation, before step S302, after the first terminal device sets up an RRC connection to the network device, that is, when the first terminal device is in an RRC connected state, the first terminal device may perform step S302 to send the second request message to the network device. The second request message may include a first indication, and the first indication indicates information that the first terminal device has a capability of providing a relay service; and/or the second request message may include a second indication, and the second indication indicates information about a quantity of terminal devices that can perform access through the first terminal device. In other words, in step S302, the first terminal device may request the first configuration information from the network device based on capability indication information of the first terminal device. This may be specifically implemented by including the first indication and/or the second indication in the second request message sent to the network device. Correspondingly, after receiving the second request message that carries the first indication and/or the second indication and that is sent by the first terminal device, the network device may determine that the first terminal device has capability information about providing the relay service, so that the network device may allocate the first radio bearer to the first terminal device based on the first indication and/or the second indication, and send, to the first terminal device, the first configuration information used to configure the first radio bearer. In addition, the first indication and/or the second indication may alternatively be carried in another message sent by the first terminal device to the network device. This is not specifically limited herein.

For example, the first indication may be implemented by using 1-bit indication information or multi-bit indication information. Herein, an example in which the first indication is implemented by using the 1-bit indication information is used for description. When the 1-bit indication information sent by the first terminal device to the network device is "0", it indicates that the first terminal device does not have the capability of providing the relay service. When the 1-bit indication information sent by the first terminal device to the network device is " 1", it indicates that the first terminal device has the capability of providing the relay service. The second indication information may be implemented by using value indication information or capability level indication information (where a higher level indicates that a larger quantity of remote terminal devices can perform access), or may be implemented in another manner. Herein, an example in which the second indication is implemented by using the value indication information is used for description. The value indication information may be "n", indicating that the quantity of remote terminal devices that can perform access through the first terminal device is n, where n is a natural number.

S303: The network device sends the first configuration information to the first terminal device.

In this embodiment, the network device sends the first configuration information to the first terminal device. Correspondingly, in step S303, the first terminal device receives the first configuration information sent by the network device. The first configuration information is used to configure the first radio bearer between the first terminal device and the network device. A type of the first radio bearer may be an SRB or a DRB. That is, the first radio bearer may include a first SRB or a first DRB.

In a possible implementation, the first configuration information further includes second configuration information, the second configuration information is used to configure a second radio bearer between the first terminal device and the network device, and the second radio bearer includes a second SRB or a second DRB. The first radio bearer may be different from the second radio bearer, and the first radio bearer and the second radio bearer may each correspond to one or a group of radio bearers. The first radio bearer may be dedicated to the second terminal device corresponding to the identification information in the second request message in step S302, and the second radio bearer may be dedicated to the second terminal device corresponding to the identification information in the second request message in step S302 (as a standby bearer). In addition, the first radio bearer and the second radio bearer may alternatively be one or a group of public radio bearers. In other words, the first radio bearer and the second radio bearer may be used to carry messages of a plurality of different remote terminal devices. Therefore, when the first terminal device needs to transmit RRC messages from the plurality of remote terminal devices through a radio bearer between the first terminal device and the network device, the first terminal device may perform transmission through the first radio bearer for a plurality of times, that is, forward the messages of the plurality of remote terminal devices by subsequently reusing the first radio bearer for a plurality of times. This improves utilization of the first radio bearer, and reduces signaling consumption between the first terminal device and the network device. Alternatively, the first terminal device may separately perform transmission through the first radio bearer and the second radio bearer, that is, perform concurrent transmission through different radio bearers, so that the plurality of remote terminal devices can quickly access the network device. This improves communication efficiency.

In a possible implementation, a logical channel configuration in the first configuration information includes logical channel group (Logical Channel Group, LCG) information and/or schedule request (Schedule Request, SR) information, and the LCG information and/or the SR information request/requests, from the network device, a resource for sending the first RRC message.

S304: The first terminal device sends a first message to the network device.

In this embodiment, the first terminal device sends the first message to the network device through the first radio bearer configured by using the first configuration information in step S303. Correspondingly, in step S304, the network device receives, through the first radio bearer, the first message sent by the first terminal device. The first message includes the first RRC message sent by the second terminal device in step S 102.

After step S304, the network device may determine, based on the first RRC message in the first message and/or the identification information of the second terminal device, whether to set up the RRC connection to the second terminal device. In addition, after step S304, the network device may send a feedback message of the first message to the first terminal device through the first radio bearer. For a specific process in which the network device and the first terminal device process the first message and the feedback message corresponding to the first message after step S304, refer to the foregoing process in which the network device and the first terminal device process the first message and the feedback message corresponding to the first message after step S103 in FIG. 2. Details are not described herein again.

In a possible implementation, when the first radio bearer configured by using the first configuration information in step S303 is a radio bearer dedicated to the first terminal device, the first message sent by the first terminal device through the dedicated first radio bearer in step S304 may not carry the identification information of the second terminal device. When the first radio bearer configured by using the first configuration information in step S303 is a public radio bearer, the first message sent by the first terminal device through the dedicated first radio bearer in step S304 may carry the identification information of the second terminal device, to identify the first RRC message in the first message, so that the network device can determine that the first RRC message is associated with the second terminal device. This increases a success rate of accessing the network device by the second terminal device.

In addition, the logical channel configuration in the first configuration information obtained by the first terminal device in step S301 includes the logical channel group LCG information and/or the schedule request SR information, and the LCG information and/or the SR information request/requests, from the network device, a resource for sending the first message. In this case, in an execution process of step S304, when determining that no resource is available, the first terminal device sends, to the network device based on the LCG information and/or the SR information, a request message used to apply for a resource. Specifically, the first terminal device may send a buffer status report (Buffer Status Report, BSR) to the network device by using the LCG information, and/or the first terminal device may send an SR message to the network device by using the SR information, to request, from the network device, the resource for sending the first message. Then, when the first terminal device determines that there is an available resource, the first terminal device performs a process of sending the first message to the network device in step S301. In this way, the first terminal device may determine, depending on whether there is an available resource, to send, to the network device, the request message used to apply for the resource. This can reduce signaling consumption of the first terminal device, avoid a failure to send the first message, and increase the success rate of accessing the network device by the second terminal device.

In this embodiment, the first terminal device receives the first radio resource control RRC message from the second terminal device, where the first RRC message requests to set up the RRC connection between the second terminal device and the network device. Then, the first terminal device sends the second request message to the network device, where the second request message requests the first configuration information, the first configuration information is used to configure the first radio bearer between the first terminal device and the network device, the first radio bearer includes the first signaling radio bearer SRB or the first data radio bearer DRB, and the second request message includes the identification information of the second terminal device. Then, the first terminal device receives the first configuration information from the network device. Further, the first terminal device sends the first message to the network device through the first radio bearer, where the first message includes the first RRC message. The first terminal device may be a relay terminal device, and the second terminal device may be a remote terminal device. After receiving the first RRC message from the second terminal device, the first terminal device sends, to the network device, the second request message that requests the first configuration information, where the first configuration information is used to configure the first radio bearer between the first terminal device and the network device. Then, after receiving the first configuration information from the network device, the first terminal device sends, to the network device through the first radio bearer, the first message that carries the first RRC message. That is, the first terminal device forwards the first RRC message from the second terminal device by sending the first message to the network device through the first radio bearer configured by using the first configuration information sent by the network device. Then, the network device may set up the RRC connection to the second terminal device based on the first message and perform communication. In this way, communication between the second terminal device and the network device is implemented in a user equipment-to-network relay (U2N) scenario. This increases the success rate of accessing the network device by the second terminal device, enhances a coverage capability of the network device, and improves an access capacity of the network device.

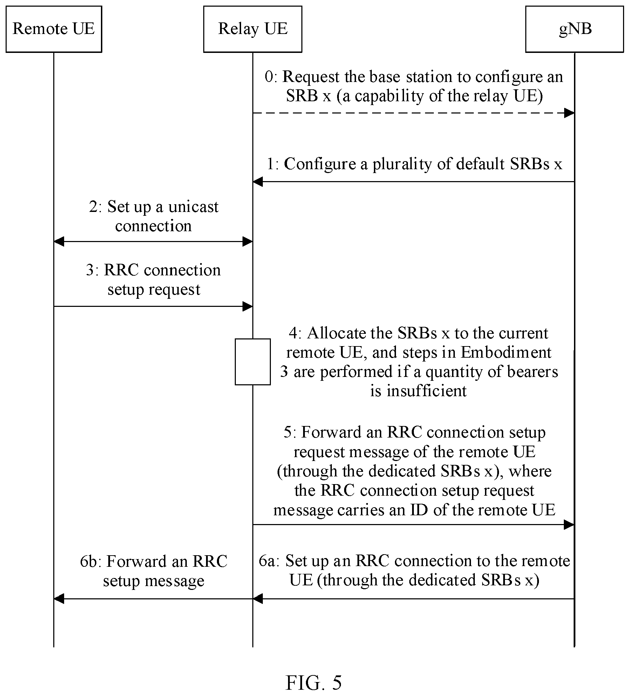

Based on embodiments shown in FIG. 2 to FIG. 4, the following further describes embodiments of this application in FIG. 5 to FIG. 7 with reference to specific application scenarios. In embodiments shown in FIG. 5 to FIG. 7, an example in which a relay UE is a first terminal device, a remote UE is a second terminal device (or a third terminal device), and a gNB (base station) is a network device is used for description.

### Embodiment 1

Refer to FIG. 5. An embodiment of this application provides another communication method. The method includes the following steps.

Step 0: A relay UE requests, from a gNB, the base station to configure an SRB x (a capability of the relay UE).

Step 1: The gNB configures a plurality of default SRBs x for the relay UE.

In step 1, the base station configures, for the relay UE, the plurality of bearers used to transmit an SRB 0-related message of a remote UE.

Before step 1, optionally, the relay UE sends a report message to the base station (that is, performs step 0) after determining that the relay UE has a capability of providing a relay service. The report message carries an indication that the relay UE can serve as a relay UE, and requests the base station to configure the SRBs x. In addition, the report message may further carry capability information of the relay UE, for example, a maximum quantity of remote UEs for which the relay UE can provide a relay service. When sending the configurations in step 1, the base station considers the capability of the relay UE, and a quantity of SRBs x does not exceed a quantity of remote UEs that can be supported by the relay UE.

Optionally, the SRB x configurations may not be configured by the base station, but the plurality of default SRBs x are introduced into a protocol (that is, predefined in the relay UE). After determining that the relay UE has the capability of providing the relay service, the relay UE may use the default SRBs x.

Step 2: The relay UE and the remote UE set up a unicast connection.

In step 2, the remote UE sends the SRB 0-related message to the relay UE. In this case, the unicast connection between the remote UE and the relay UE has been set up, but an RRC connection between the remote UE and the base station has not been set up. A condition for entering this state may be as follows: The remote UE initially accesses the relay UE, and the unicast connection between the remote UE and the relay UE is just set up (that is, the remote UE and the relay UE may communicate with each other over a sidelink). Alternatively, after the remote UE has set up the RRC connection to the base station through an L2 relay, the base station sends an RRC reconfiguration message to the remote UE, to indicate the remote UE to reestablish an RRC connection. As a result, the RRC connection between the remote UE and the base station is disconnected.

Step 3: The remote UE sends an RRC connection setup request to the relay UE.

In step 3, after receiving the SRB 0-related message of the remote UE in step 2, the relay UE allocates the pre-obtained SRBs x to the remote UE, and forwards the SRB 0-related message of the remote UE through the bearers. The message carries a local (local) ID of the remote UE when being forwarded. Because the quantity of pre-configured SRBs x is limited, after access of a new remote UE, the relay UE may not have sufficient SRBs x. In this case, the relay UE needs to apply to the base station for an additional SRB x. Specific steps are the same as those in the embodiment shown in FIG. 4.

Optionally, the base station configures an LCG configuration or a dedicated SR configuration for a logical channel of an SRB x. In this way, in step 3, the relay UE can request, from the base station by using a BSR or an SR, a resource used to transmit the SRB 0-related message of the remote UE.

Step 4: The relay UE allocates the SRBs x to the current remote UE, and steps in Embodiment 3 are performed if the quantity of bearers is insufficient.

Step 5: The relay UE forwards an RRC connection setup request message of the remote UE (through the dedicated SRBs x), where the RRC connection setup request message carries the ID of the remote UE.

Step 6a: Set up the RRC connection to the remote UE (through the dedicated SRBs x).

Step 6b: The relay UE forwards an RRC setup message to the remote UE.

In this embodiment, in step 5, after receiving the SRB 0-related message of the remote UE, the base station also use the allocated dedicated SRBs x for replying, so that the relay UE can identify the dedicated SRBs x, and forward the message to the target remote UE. Based on the request of the remote UE, the base station configures a BH RLC bearer for an SRB 1, of the remote UE, between the base station and the relay UE, and sets up, for the SRB 1 of the remote UE, a unicast (sidelink unicast, SL) SRB between the relay UE and the remote UE.

When the SL unicast connection is released or the RRC connection to the remote UE is disconnected, the relay UE removes a binding relationship between an SRB x and the remote UE, so that the SRB x can be used by another remote UE that performs subsequent access.

Therefore, in Embodiment 1, the plurality of dedicated SRBs x of the remote UE are pre-configured, so that the relay UE can directly allocate the SRBs x to the newly accessed remote UE. The local ID of the remote UE is carried when a first message of the remote UE is forwarded, so that the base station can identify the remote UE. In addition, the LCG configuration or the dedicated SR configuration is configured for the SRBs x. In this way, the relay UE can request, from the base station by using the BSR or the SR, the resource used to transmit the SRB 0-related message of the remote UE.

### Embodiment 2

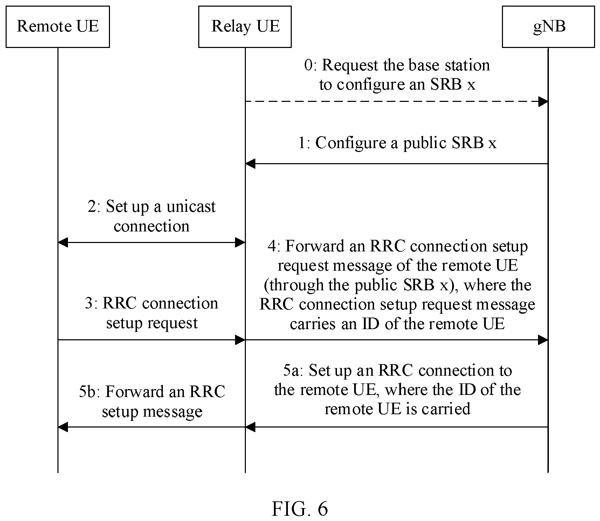

Refer to FIG. 6. An embodiment of this application provides another communication method. The method includes the following steps.

Step 0: A relay UE requests, from a gNB, the base station to configure an SRB x.

Step 1: The gNB configures a public SRB x for the relay UE.

In step 1, the base station configures, for the relay UE, the public bearer used to transmit an SRB 0-related message of a remote UE.

Before step 1, optionally, the relay UE sends a report message to the base station (that is, performs step 0) after determining that the relay UE has a capability of providing a relay service. The report message carries an indication that the relay UE can serve as a relay UE, and requests the base station to configure the SRB x.

Optionally, the SRB x configuration may not be configured by the base station, but the default SRB x is introduced into a protocol (that is, predefined in the relay UE). After determining that the relay UE has the capability of providing the relay service, the relay UE may use the default SRB x.

Step 2: The relay UE and the remote UE set up a unicast connection.

Step 3: The remote UE sends an RRC connection setup request to the relay UE.

In step 2 and step 3, the remote UE sends the SRB 0-related message to the relay UE. In this case, the unicast connection between the remote UE and the relay UE has been set up, but an RRC connection between the remote UE and the base station has not been set up. A condition for entering this state may be as follows: The remote UE initially accesses the relay UE, and the unicast connection between the two terminals is just set up. Alternatively, after the remote UE has set up the RRC connection to the base station through an L2 relay, the base station sends an RRC reconfiguration message to the remote UE, to indicate the remote UE to reestablish an RRC connection. As a result, the RRC connection between the remote UE and the base station is disconnected.

Step 4: The relay UE forwards an RRC connection setup request message of the remote UE (through the public SRB x), where the RRC connection setup request message carries an ID of the remote UE.

In step 4, after receiving the SRB 0-related message of the remote UE, the relay UE forwards the SRB 0-related message of the remote UE through the default bearer. The message carries the local ID of the remote UE when being forwarded.

Optionally, the base station configures an LCG configuration or a dedicated SR configuration for a logical channel of the SRB x. In this way, in step 3, the relay UE can request, from the base station by using a BSR or an SR, a resource used to transmit the SRB 0-related message of the remote UE.

Step 5a: Set up the RRC connection to the remote UE, where the ID of the remote UE is carried.

Step 5b: The relay UE forwards an RRC setup message to the remote UE.

In step Sa and step 5b, after receiving the SRB 0-related message of the remote UE, the base station also use the public SRB x for replying. The replied message carries the local ID of the remote UE. The relay UE forwards the message to the target remote UE by identifying the local ID of the remote UE. Based on the request of the remote UE, the base station configures a BH RLC bearer for an SRB 1, of the remote UE, between the base station and the relay UE, and sets up, for the SRB 1 of the remote UE, an SL-SRB between the relay UE and the remote UE.

Therefore, in Embodiment 2, the public SRB x of the remote UE is pre-configured, so that the relay UE can forward a first message of the remote UE through the public SRB x. The local ID of the remote UE is carried when the first message of the remote UE is forwarded, so that the base station can identify the remote UE. The LCG configuration or the dedicated SR configuration is configured for the SRB x. In this way, the relay UE can request, from the base station by using the BSR or the SR, the resource used to transmit the SRB 0-related message of the remote UE.

### Embodiment 3

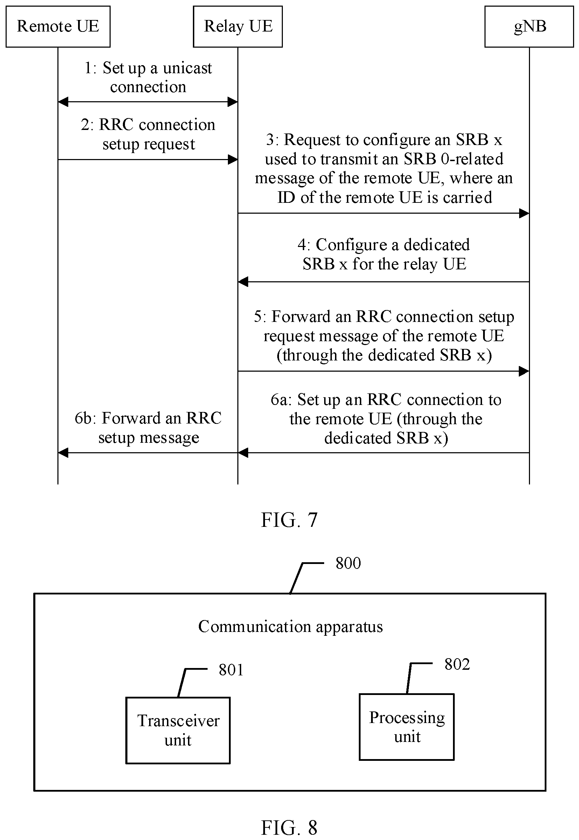

Refer to FIG. 7. An embodiment of this application provides another communication method. The method includes the following steps.

Step 1: A relay UE and a remote UE set up a unicast connection.

Step 2: The remote UE sends an RRC connection setup request to the relay UE.

In step 1 and step 2, the remote UE sends an SRB 0-related message to the relay UE. In this case, the unicast connection between the remote UE and the relay UE has been set up, but an RRC connection between the remote UE and a base station has not been set up. A condition for entering this state may be as follows: The remote UE initially accesses the relay UE, and the unicast connection between the two terminals is just set up. Alternatively, after the remote UE has set up the RRC connection to the base station through an L2 relay, the base station sends an RRC reconfiguration message to the remote UE, to indicate the remote UE to reestablish an RRC connection. As a result, the RRC connection between the remote UE and the base station is disconnected.

Step 3: The relay UE requests the gNB to configure an SRB x used to transmit the SRB 0-related message of the remote UE, where an ID of the remote UE is carried.

In step 3, the relay UE sends a request message (which may be an RRC message, a MAC CE, or the like) to the base station, to request the base station to configure the dedicated SRB x for the remote UE, where the request message carries the local ID of the remote UE. An occasion on which the relay UE sends the request message to the base station may be: after the unicast connection to the remote UE is set up, or after a first message of the remote UE is received.

Step 4: The gNB configures the dedicated SRB x for the relay UE.

In step 4, the base station configures, for the relay UE, the dedicated SRB x used to transmit the SRB 0-related message of the remote UE. Optionally, the base station configures an LCG configuration or a dedicated SR configuration for a logical channel of the SRB x. In this way, in step 4, the relay UE can request, from the base station by using a BSR or an SR, a resource used to transmit the SRB 0-related message of the remote UE.

Step 5: The relay UE forwards an RRC connection setup request message of the remote UE (through the dedicated SRB x).

In step 5, after receiving the SRB 0-related message sent by the remote UE, the relay UE forwards the SRB 0-related message of the remote UE through the dedicated SRB x configured by the base station.

Step 6a: Set up the RRC connection to the remote UE (through the dedicated SRB x).

Step 6b: The relay UE forwards an RRC setup message to the remote UE.

In step 6a and step 6b, after receiving the SRB 0-related message of the remote UE, the base station also use the dedicated SRB x for replying, so that the relay UE can identify the dedicated SRB x, and forward the message to the target remote UE. Based on the request of the remote UE, the base station configures a BH RLC bearer for an SRB 1, of the remote UE, between the base station and the relay UE, and sets up, for the SRB 1 of the remote UE, an SL-SRB between the relay UE and the remote UE.

Therefore, in Embodiment 3, during access of a new remote UE, the relay UE requests the base station to configure a dedicated SRB x, so that the relay UE can forward the first message of the remote UE through the dedicated SRB x. Both the relay UE and the base station can identify corresponding remote UE through the dedicated SRB x. In addition, the LCG configuration or the dedicated SR configuration is configured for the SRB x. In this way, the relay UE can request, from the base station by using the BSR or the SR, the resource used to transmit the SRB 0-related message of the remote UE. In other words, in Embodiment 3, the relay UE requests the base station to configure the SRB x dedicated to the target remote UE. This resolves a conventional-technology problem that the UE cannot be identified.

The foregoing describes embodiments of this application from a perspective of a method. The following describes a communication apparatus in embodiments of this application from a perspective of specific apparatus implementation.

Refer to FIG. 8. An embodiment of this application provides a communication apparatus 800. Specifically, the communication apparatus 800 may be the first terminal device in the foregoing embodiments. The communication apparatus 800 includes a transceiver unit 801 and a processing unit 802.

The processing unit 802 is configured to obtain first configuration information, where the first configuration information is used to configure a first radio bearer between the first terminal device and a network device, and the first radio bearer includes a first signaling radio bearer SRB or a first data radio bearer DRB.

The transceiver unit 801 is configured to receive a first radio resource control RRC message from a second terminal device, where the first RRC message requests to set up an RRC connection between the second terminal device and the network device.

The transceiver unit 801 is further configured to send a first message to the network device through the first radio bearer, where the first message includes the first RRC message and identification information of the second terminal device.

In a possible implementation, the processing unit 802 is specifically configured to: receive the first configuration information from the network device through the transceiver unit 801; or
obtain predefined first configuration information.

In a possible implementation,
the transceiver unit 801 is further configured to send a first request message to the network device, where the first request message requests the first configuration information.

In a possible implementation of the fifth aspect of embodiments of this application,
the first request message includes a first indication, and the first indication indicates information that the first terminal device has a capability of providing a relay service; and/or
the first request message includes a second indication, and the second indication indicates information about a quantity of terminal devices that can perform access through the first terminal device.

In a possible implementation, the first configuration information further includes second configuration information, the second configuration information is used to configure a second radio bearer between the first terminal device and the network device, and the second radio bearer includes a second SRB or a second DRB.

The transceiver unit 801 is further configured to receive a second RRC message from a third terminal device, where the second RRC message requests to set up an RRC connection between the third terminal device and the network device.

The transceiver unit 801 is further configured to send a second message to the network device through the second radio bearer, where the second message includes the second RRC message and identification information of the third terminal device.

In a possible implementation, a logical channel configuration in the first configuration information includes logical channel group LCG information and/or SR information, and the LCG information and/or the SR information request/requests, from the network device, a resource for sending the first message.

In a possible implementation, the first RRC message includes an RRC connection request message, an RRC reestablishment request message, or an RRC connection resume request message.

In a possible implementation, composition modules of the communication apparatus may be further configured to perform the steps performed in the possible implementations of the first aspect. For details, refer to the first aspect. Details are not described herein again.

It should be noted that for specific content such as an information execution process of the units of the communication apparatus 800, refer to descriptions in the foregoing method embodiments of this application. Details are not described herein again.

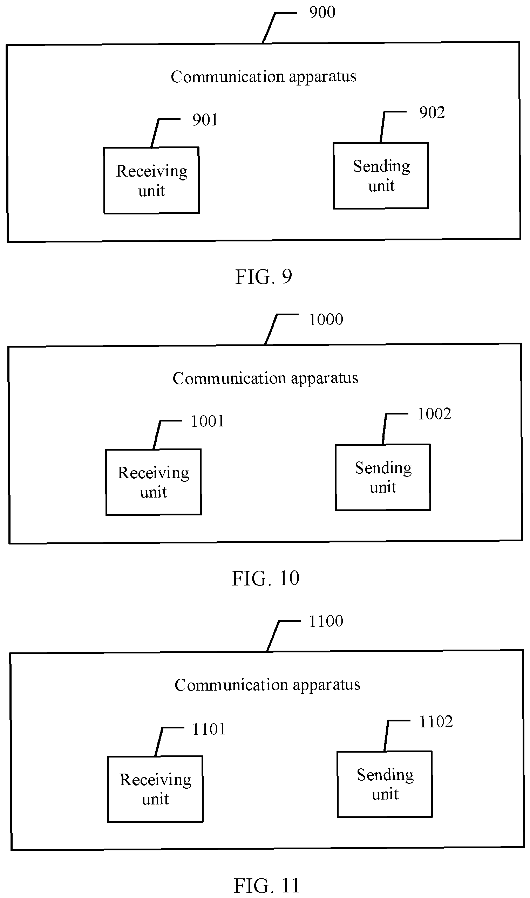

Refer to FIG. 9. An embodiment of this application provides a communication apparatus 900. Specifically, the communication apparatus 900 may be the network device in the foregoing embodiments. The communication apparatus 900 includes a receiving unit 901 and a sending unit 902.

The sending unit 902 is configured to send first configuration information to a first terminal device, where the first configuration information is used to configure a first radio bearer between the first terminal device and the network device, and the first radio bearer includes a first signaling radio bearer SRB or a first data radio bearer DRB.

The receiving unit 901 is configured to receive, through the first radio bearer, a first message sent by the first terminal device, where the first message includes a first RRC message and identification information of a second terminal device, and the first RRC message requests to set up an RRC connection between the second terminal device and the network device.

In a possible implementation, the receiving unit 901 is further configured to receive a first request message from the first terminal device, where the first request message requests the first configuration information.

In a possible implementation, the first request message includes a first indication, and the first indication indicates information that the first terminal device has a capability of providing a relay service; and/or
the first request message includes a second indication, and the second indication indicates information about a quantity of terminal devices that can perform access through the first terminal device.

In a possible implementation, the first configuration information further includes second configuration information, the second configuration information is used to configure a second radio bearer between the first terminal device and the network device, and the second radio bearer includes a second SRB or a second DRB.

The receiving unit 901 is further configured to receive, through the second radio bearer, a second message sent by the first terminal device, where the second message includes a second RRC message and identification information of a third terminal device, and the second RRC message requests to set up an RRC connection between the third terminal device and the network device.

In a possible implementation, a logical channel configuration in the first configuration information includes logical channel group LCG information and/or SR information, and the LCG information and/or the SR information request/requests, from the network device, a resource for sending the first message.

In a possible implementation, the first RRC message includes an RRC connection request message, an RRC reestablishment request message, or an RRC connection resume request message.

It should be noted that for specific content such as an information execution process of the units of the communication apparatus 900, refer to descriptions in the foregoing method embodiments of this application. Details are not described herein again.

Refer to FIG. 10. An embodiment of this application provides a communication apparatus 1000. Specifically, the communication apparatus 1000 may be the first terminal device in the foregoing embodiments. The communication apparatus 1000 includes a receiving unit 1001 and a sending unit 1002.

The receiving unit 1001 is configured to receive a first radio resource control RRC message from a second terminal device, where the first RRC message requests to set up an RRC connection between the second terminal device and a network device.

The sending unit 1002 is configured to send a second request message to the network device, where the second request message requests first configuration information, the first configuration information is used to configure a first radio bearer between the first terminal device and the network device, the first radio bearer includes a first signaling radio bearer SRB or a first data radio bearer DRB, and the second request message includes identification information of the second terminal device.

The receiving unit 1001 is further configured to receive the first configuration information from the network device.

The sending unit 1002 is further configured to send a first message to the network device through the first radio bearer, where the first message includes the first RRC message.

In a possible implementation,
the first message further includes the identification information of the second terminal device.

In a possible implementation,
a logical channel configuration in the first configuration information includes logical channel group LCG information and/or SR information, and the LCG information and/or the SR information request/requests, from the network device, a resource for sending the first message.

In a possible implementation,
the second request message includes a first indication, and the first indication indicates information that the first terminal device has a capability of providing a relay service; and/or
the second request message includes a second indication, and the second indication indicates information about a quantity of terminal devices that can perform access through the first terminal device.

In a possible implementation, the first RRC message includes an RRC connection request message, an RRC reestablishment request message, or an RRC connection resume request message.

It should be noted that for specific content such as an information execution process of the units of the communication apparatus 1000, refer to descriptions in the foregoing method embodiments of this application. Details are not described herein again.

Refer to FIG. 11. An embodiment of this application provides a communication apparatus 1100. Specifically, the communication apparatus 1100 may be the network device in the foregoing embodiments. The communication apparatus 1100 includes a receiving unit 1101 and a sending unit 1102.

The receiving unit 1101 is configured to receive a second request message from a first terminal device, where the second request message requests first configuration information, the first configuration information is used to configure a first radio bearer between the first terminal device and the network device, and the first radio bearer includes a first signaling radio bearer SRB or a first data radio bearer DRB.

The sending unit 1102 is configured to send the first configuration information to the first terminal device.

The receiving unit 1101 is further configured to receive, through the first radio bearer, a first message sent by the first terminal device, where the first message includes a first RRC message, and the first RRC message requests to set up an RRC connection between a second terminal device and the network device.

In a possible implementation,
the first message further includes identification information of the second terminal device.

In a possible implementation,
a logical channel configuration in the first configuration information includes logical channel group LCG information and/or SR information, and the LCG information and/or the SR information request/requests, from the network device, a resource for sending the first message.

In a possible implementation,
the second request message includes a first indication, and the first indication indicates information that the first terminal device has a capability of providing a relay service; and/or
the second request message includes a second indication, and the second indication indicates information about a quantity of terminal devices that can perform access through the first terminal device.

In a possible implementation, the first RRC message includes an RRC connection request message, an RRC reestablishment request message, or an RRC connection resume request message.

It should be noted that for specific content such as an information execution process of the units of the communication apparatus 1100, refer to descriptions in the foregoing method embodiments of this application. Details are not described herein again.

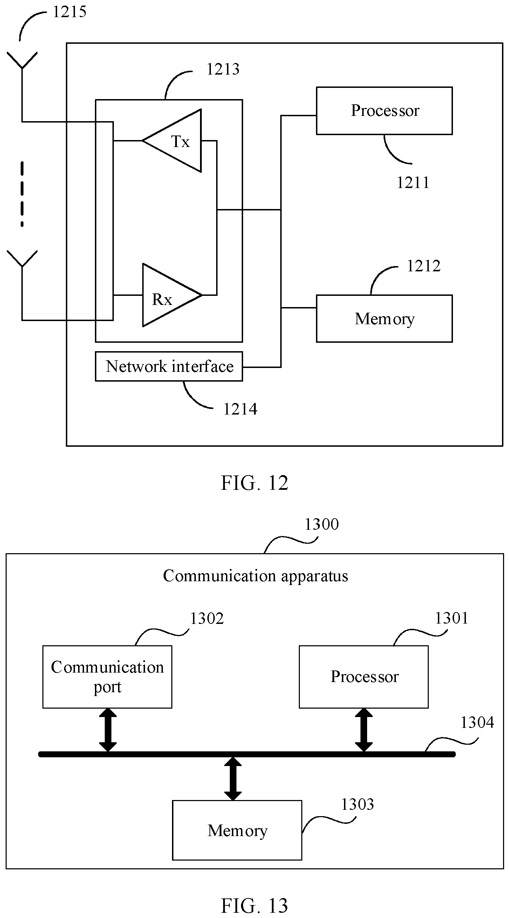

FIG. 12 is a schematic diagram of a structure of a communication apparatus in the foregoing embodiments according to an embodiment of this application. The communication apparatus may be specifically the network device in the foregoing embodiments. For a structure of the communication apparatus, refer to the structure shown in FIG. 12.

The communication apparatus includes at least one processor 1211, at least one memory 1212, at least one transceiver 1213, at least one network interface 1214, and one or more antennas 1215. The processor 1211, the memory 1212, the transceiver 1213, and the network interface 1214 are connected, for example, by using a bus. In this embodiment of this application, the connection may include various interfaces, transmission lines, buses, or the like. This is not limited in this embodiment. The antenna 1215 is connected to the transceiver 1213. The network interface 1214 is configured to connect the communication apparatus to another communication device over a communication link. For example, the network interface 1214 may include a network interface between the communication apparatus and a core network device, for example, an S1 interface. The network interface may include a network interface between the communication apparatus and another network device (for example, another access network device or another core network device), for example, an X2 interface or an Xn interface.

The processor 1211 is mainly configured to: process a communication protocol and communication data; control the entire communication apparatus, execute a software program, and process data of the software program. For example, the processor 1211 is configured to support the communication apparatus in performing actions described in embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 1211 in FIG. 12. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to enhance a processing capability of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

The memory is mainly configured to store the software program and the data. The memory 1212 may exist independently, and is connected to the processor 1211. Optionally, the memory 1212 and the processor 1211 may be integrated, for example, integrated into a chip. The memory 1212 can store program code for executing the technical solutions in this embodiment of this application, and the processor 1211 controls execution of the program code. Various types of executed computer program code may also be considered as drivers of the processor 1211.

FIG. 12 shows only one memory and one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or an independent storage element. This is not limited in this embodiment of this application.

The transceiver 1213 may be configured to support receiving or sending of a radio frequency signal between the communication apparatus and a terminal, and the transceiver 1213 may be connected to the antenna 1215. The transceiver 1213 includes a transmitter Tx and a receiver Rx. Specifically, the one or more antennas 1215 may receive the radio frequency signal. The receiver Rx of the transceiver 1213 is configured to: receive the radio frequency signal from the antenna, convert the radio frequency signal into a digital baseband signal or a digital intermediate frequency signal, and provide the digital baseband signal or the digital intermediate frequency signal for the processor 1211, so that the processor 1211 further processes the digital baseband signal or the digital intermediate frequency signal, for example, performs demodulation processing and decoding processing. In addition, the transmitter Tx of the transceiver 1213 is further configured to: receive a modulated digital baseband signal or digital intermediate frequency signal from the processor 1211, convert the modulated digital baseband signal or digital intermediate frequency signal into a radio frequency signal, and send the radio frequency signal through the one or more antennas 1215. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

The transceiver may also be referred to as a transceiver unit, a transceiver machine, a transceiver apparatus, or the like. Optionally, a component that is in the transceiver unit and that is configured to implement a receiving function may be considered as a receiving unit. A component that is in the transceiver unit and that is configured to implement a sending function may be considered as a sending unit. That is, the transceiver unit includes the receiving unit and the sending unit. The receiving unit may also be referred to as a receiver machine, an input port, a receiver circuit, or the like. The sending unit may be referred to as a transmitter machine, a transmitter, a transmitter circuit, or the like.

It should be noted that the communication apparatus shown in FIG. 12 may be specifically configured to: implement the steps implemented by the network device in the method embodiments corresponding to FIG. 2 to FIG. 7, and implement technical effects corresponding to the network device. For a specific implementation of the communication apparatus shown in FIG. 12, refer to descriptions in the method embodiments corresponding to FIG. 2 to FIG. 7. Details are not described herein again.

FIG. 13 is a schematic diagram of a possible logical structure of a communication apparatus 1300 in the foregoing embodiments according to an embodiment of this application. The communication apparatus may be specifically the first terminal device in the foregoing embodiments. The communication apparatus 1300 may include but is not limited to a processor 1301, a communication port 1302, a memory 1303, and a bus 1304. In this embodiment of this application, the processor 1301 is configured to control and process an action of the communication apparatus 1300.

In addition, the processor 1301 may be a central processing unit, a general purpose processor, a digital signal processor, an application-specific integrated circuit, a field programmable gate array or another programmable logic device, a transistor logic device, a hardware component, or any combination thereof. The processor 1301 may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. A person skilled in the art may clearly understand that, for the purpose of convenient and brief description, for detailed working processes of the foregoing system, apparatus, and unit, refer to corresponding processes in the foregoing method embodiments. Details are not described herein again.

It should be noted that the communication apparatus shown in FIG. 13 may be specifically configured to: implement the steps implemented by the first terminal device in the method embodiments corresponding to FIG. 2 to FIG. 7, and implement technical effects corresponding to the first terminal device. For a specific implementation of the communication apparatus shown in FIG. 13, refer to descriptions in the method embodiments corresponding to FIG. 2 to FIG. 7. Details are not described herein again.

An embodiment of this application further provides a computer-readable storage medium storing one or more computer-executable instructions. When the computer-executable instructions are executed by a processor, the processor performs the methods according to the possible implementations of the communication apparatus in the foregoing embodiments. The communication apparatus may be specifically the first terminal device in the foregoing method embodiments corresponding to FIG. 2 to FIG. 7.

An embodiment of this application further provides a computer-readable storage medium storing one or more computer-executable instructions. When the computer-executable instructions are executed by a processor, the processor performs the methods according to the possible implementations of the communication apparatus in the foregoing embodiments. The communication apparatus may be specifically the network device in the foregoing method embodiments corresponding to FIG. 2 to FIG. 7.

An embodiment of this application further provides a computer program product (or referred to as a computer program) storing one or more computers. When the computer program product is executed by a processor, the processor performs the methods according to the possible implementations of the foregoing communication apparatus. The communication apparatus may be specifically the first terminal device in the foregoing method embodiments corresponding to FIG. 2 to FIG. 7.

An embodiment of this application further provides a computer program product storing one or more computers. When the computer program product is executed by a processor, the processor performs the methods according to the possible implementations of the foregoing communication apparatus. The communication apparatus may be specifically the network device in the foregoing method embodiments corresponding to FIG. 2 to FIG. 7.

An embodiment of this application further provides a chip system. The chip system includes a processor, configured to support a communication apparatus in implementing the functions in the possible implementations of the foregoing communication apparatus. In a possible design, the chip system may further include a memory. The memory is configured to store program instructions and data that are necessary for the communication apparatus. The chip system may include a chip, or may include a chip and another discrete component. The communication apparatus may be specifically the first terminal device in the foregoing method embodiments corresponding to FIG. 2 to FIG. 7.

An embodiment of this application further provides a chip system. The chip system includes a processor, configured to support a communication apparatus in implementing the functions in the possible implementations of the foregoing communication apparatus. In a possible design, the chip system may further include a memory. The memory is configured to store program instructions and data that are necessary for the communication apparatus. The chip system may include a chip, or may include a chip and another discrete component. The communication apparatus may be specifically the network device in the foregoing method embodiments corresponding to FIG. 2 to FIG. 7.

An embodiment of this application further provides a network system architecture. The network system architecture includes the foregoing communication apparatuses. The communication apparatuses may be specifically the first terminal device and the network device in the foregoing method embodiments corresponding to FIG. 2 to FIG. 7.

In several embodiments provided in this application, it should be understood that the disclosed system, apparatus, and method may be implemented in another manner. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, to be specific, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for indicating a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
obtaining first configuration information, wherein the first configuration information is used to configure a first radio bearer between a first terminal device and a network device, and the first radio bearer comprises a first signaling radio bearer SRB or a first data radio bearer DRB;
receiving a first radio resource control RRC message from a second terminal device, wherein the first RRC message requests to set up an RRC connection between the second terminal device and the network device; and
sending a first message to the network device through the first radio bearer, wherein the first message comprises the first RRC message and identification information of the second terminal device.

2. The method according to claim 1, wherein the obtaining first configuration information comprises:
receiving the first configuration information from the network device; or
obtaining predefined first configuration information.

3. The method according to claim 2, wherein before the receiving the first configuration information from the network device, the method further comprises:
sending a first request message to the network device, wherein the first request message requests the first configuration information.

4. The method according to claim 3, wherein
the first request message comprises a first indication, and the first indication indicates information that the first terminal device has a capability of providing a relay service; and/or
the first request message comprises a second indication, and the second indication indicates information about a quantity of terminal devices that can perform access through the first terminal device.

5. The method according to any one of claims 1 to 4, wherein the first configuration information further comprises second configuration information, the second configuration information is used to configure a second radio bearer between the first terminal device and the network device, and the second radio bearer comprises a second SRB or a second DRB; and
receiving a second RRC message from a third terminal device, wherein the second RRC message requests to set up an RRC connection between the third terminal device and the network device; and
sending a second message to the network device through the second radio bearer, wherein the second message comprises the second RRC message and identification information of the third terminal device.

6. The method according to any one of claims 1 to 4, wherein
a logical channel configuration in the first configuration information comprises logical channel group LCG information and/or schedule request SR information, and the LCG information and/or the SR information request/requests, from the network device, a resource for sending the first message.

7. The method according to any one of claims 1 to 4, wherein the first RRC message comprises an RRC connection request message, an RRC reestablishment request message, or an RRC connection resume request message.

8. A communication method, comprising:
sending first configuration information to a first terminal device, wherein the first configuration information is used to configure a first radio bearer between the first terminal device and a network device, and the first radio bearer comprises a first signaling radio bearer SRB or a first data radio bearer DRB; and
receiving, through the first radio bearer, a first message sent by the first terminal device, wherein the first message comprises a first RRC message and identification information of a second terminal device, and the first RRC message requests to set up an RRC connection between the second terminal device and the network device.

9. The method according to claim 8, wherein before the sending first configuration information to a first terminal device, the method further comprises:
receiving a first request message from the first terminal device, wherein the first request message requests the first configuration information.

10. The method according to claim 9, wherein
the first request message comprises a first indication, and the first indication indicates information that the first terminal device has a capability of providing a relay service; and/or
the first request message comprises a second indication, and the second indication indicates information about a quantity of terminal devices that can perform access through the first terminal device.

11. The method according to any one of claims 8 to 10, wherein the first configuration information further comprises second configuration information, the second configuration information is used to configure a second radio bearer between the first terminal device and the network device, and the second radio bearer comprises a second SRB or a second DRB; and
receiving, through the second radio bearer, a second message sent by the first terminal device, wherein the second message comprises a second RRC message and identification information of a third terminal device, and the second RRC message requests to set up an RRC connection between the third terminal device and the network device.

12. The method according to any one of claims 8 to 10, wherein
a logical channel configuration in the first configuration information comprises logical channel group LCG information and/or schedule request SR information, and the LCG information and/or the SR information request/requests, from the network device, a resource for sending the first message.

13. The method according to any one of claims 8 to 10, wherein the first RRC message comprises an RRC connection request message, an RRC reestablishment request message, or an RRC connection resume request message.

14. A communication method, comprising:
receiving a first radio resource control RRC message from a second terminal device, wherein the first RRC message requests to set up an RRC connection between the second terminal device and a network device;
sending a second request message to the network device, wherein the second request message requests first configuration information, the first configuration information is used to configure a first radio bearer between a first terminal device and the network device, the first radio bearer comprises a first signaling radio bearer SRB or a first data radio bearer DRB, and the second request message comprises identification information of the second terminal device;
receiving the first configuration information from the network device; and
sending a first message to the network device through the first radio bearer, wherein the first message comprises the first RRC message.

15. The method according to claim 14, wherein the first message further comprises the identification information of the second terminal device.

16. The method according to claim 14 or 15, wherein a logical channel configuration in the first configuration information comprises logical channel group LCG information and/or schedule request SR information, and the LCG information and/or the SR information request/requests, from the network device, a resource for sending the first message

17. The method according to claim 14 or 15, wherein
the second request message comprises a first indication, and the first indication indicates information that the first terminal device has a capability of providing a relay service; and/or
the second request message comprises a second indication, and the second indication indicates information about a quantity of terminal devices that can perform access through the first terminal device.

18. The method according to either claim 14 or 15, wherein the first RRC message comprises an RRC connection request message, an RRC reestablishment request message, or an RRC connection resume request message.

19. A communication method, comprising:
receiving a second request message from a first terminal device, wherein the second request message requests first configuration information, the first configuration information is used to configure a first radio bearer between the first terminal device and a network device, and the first radio bearer comprises a first signaling radio bearer SRB or a first data radio bearer DRB;
sending the first configuration information to the first terminal device; and
receiving, through the first radio bearer, a first message sent by the first terminal device, wherein the first message comprises a first RRC message, and the first RRC message requests to set up an RRC connection between a second terminal device and the network device.

20. The method according to claim 19, wherein the first message further comprises identification information of the second terminal device.

21. The method according to claim 19 or 20, wherein
a logical channel configuration in the first configuration information comprises logical channel group LCG information and/or schedule request SR information, and the LCG information and/or the SR information request/requests, from the network device, a resource for sending the first message.

22. The method according to claim 19 or 20, wherein
the second request message comprises a first indication, and the first indication indicates information that the first terminal device has a capability of providing a relay service; and/or
the second request message comprises a second indication, and the second indication indicates information about a quantity of terminal devices that can perform access through the first terminal device.

23. The method according to claim 19 or 20, wherein the first RRC message comprises an RRC connection request message, an RRC reestablishment request message, or an RRC connection resume request message.

24. A communication apparatus, wherein the communication apparatus comprises a transceiver unit and a processing unit, wherein
the processing unit is configured to obtain first configuration information, wherein the first configuration information is used to configure a first radio bearer between a first terminal device and a network device, and the first radio bearer comprises a first signaling radio bearer SRB or a first data radio bearer DRB;
the transceiver unit is configured to receive a first radio resource control RRC message from a second terminal device, wherein the first RRC message requests to set up an RRC connection between the second terminal device and the network device; and
the transceiver unit is further configured to send a first message to the network device through the first radio bearer, wherein the first message comprises the first RRC message and identification information of the second terminal device.

25. The apparatus according to claim 24, wherein
the processing unit is specifically configured to: receive the first configuration information from the network device through the transceiver unit; or
obtain predefined first configuration information.

26. The apparatus according to claim 25, wherein
the transceiver unit is further configured to send a first request message to the network device, wherein the first request message requests the first configuration information.

27. The apparatus according to claim 26, wherein
the first request message comprises a first indication, and the first indication indicates information that the first terminal device has a capability of providing a relay service; and/or
the first request message comprises a second indication, and the second indication indicates information about a quantity of terminal devices that can perform access through the first terminal device.

28. The apparatus according to any one of claims 24 to 27, wherein the first configuration information further comprises second configuration information, the second configuration information is used to configure a second radio bearer between the first terminal device and the network device, and the second radio bearer comprises a second SRB or a second DRB;
the transceiver unit is further configured to receive a second RRC message from a third terminal device, wherein the second RRC message requests to set up an RRC connection between the third terminal device and the network device; and
the transceiver unit is further configured to send a second message to the network device through the second radio bearer, wherein the second message comprises the second RRC message and identification information of the third terminal device.

29. The apparatus according to any one of claims 24 to 28, wherein a logical channel configuration in the first configuration information comprises logical channel group LCG information and/or SR information, and the LCG information and/or the SR information request/requests, from the network device, a resource for sending the first message

30. The apparatus according to any one of claims 24 to 29, wherein the first RRC message comprises an RRC connection request message, an RRC reestablishment request message, or an RRC connection resume request message.

31. A communication apparatus, wherein the communication apparatus comprises a receiving unit and a sending unit, wherein
the sending unit is configured to send first configuration information to a first terminal device, wherein the first configuration information is used to configure a first radio bearer between the first terminal device and a network device, and the first radio bearer comprises a first signaling radio bearer SRB or a first data radio bearer DRB; and
the receiving unit is configured to receive, through the first radio bearer, a first message sent by the first terminal device, wherein the first message comprises a first RRC message and identification information of a second terminal device, and the first RRC message requests to set up an RRC connection between the second terminal device and the network device.

32. The apparatus according to claim 31, wherein the receiving unit is further configured to receive a first request message from the first terminal device, wherein the first request message requests the first configuration information.

33. The apparatus according to claim 32, wherein
the first request message comprises a first indication, and the first indication indicates information that the first terminal device has a capability of providing a relay service; and/or
the first request message comprises a second indication, and the second indication indicates information about a quantity of terminal devices that can perform access through the first terminal device.

34. The apparatus according to any one of claims 31 to 33, wherein the first configuration information further comprises second configuration information, the second configuration information is used to configure a second radio bearer between the first terminal device and the network device, and the second radio bearer comprises a second SRB or a second DRB; and
the receiving unit is further configured to receive, through the second radio bearer, a second message sent by the first terminal device, wherein the second message comprises a second RRC message and identification information of a third terminal device, and the second RRC message requests to set up an RRC connection between the third terminal device and the network device.

35. The apparatus according to any one of claims 31 to 34, wherein a logical channel configuration in the first configuration information comprises logical channel group LCG information and/or SR information, and the LCG information and/or the SR information request/requests, from the network device, a resource for sending the first message

36. The apparatus according to any one of claims 31 to 35, wherein the first RRC message comprises an RRC connection request message, an RRC reestablishment request message, or an RRC connection resume request message.

37. A communication apparatus, wherein the communication apparatus comprises a receiving unit and a sending unit, wherein
the receiving unit is configured to receive a first radio resource control RRC message from a second terminal device, wherein the first RRC message requests to set up an RRC connection between the second terminal device and a network device;
the sending unit is configured to send a second request message to the network device, wherein the second request message requests first configuration information, the first configuration information is used to configure a first radio bearer between a first terminal device and the network device, the first radio bearer comprises a first signaling radio bearer SRB or a first data radio bearer DRB, and the second request message comprises identification information of the second terminal device;
the receiving unit is further configured to receive the first configuration information from the network device; and
the sending unit is further configured to send a first message to the network device through the first radio bearer, wherein the first message comprises the first RRC message.

38. The apparatus according to claim 37, wherein the first message further comprises the identification information of the second terminal device.

39. The apparatus according to claim 37 or 38, wherein a logical channel configuration in the first configuration information comprises logical channel group LCG information and/or SR information, and the LCG information and/or the SR information request/requests, from the network device, a resource for sending the first message.

40. The apparatus according to any one of claims 37 to 39, wherein the second request message comprises a first indication, and the first indication indicates information that the first terminal device has a capability of providing a relay service; and/or
the second request message comprises a second indication, and the second indication indicates information about a quantity of terminal devices that can perform access through the first terminal device.

41. The apparatus according to any one of claims 37 to 40, wherein the first RRC message comprises an RRC connection request message, an RRC reestablishment request message, or an RRC connection resume request message.

42. A communication apparatus, wherein the communication apparatus comprises a receiving unit and a sending unit, wherein
the receiving unit is configured to receive a second request message from a first terminal device, wherein the second request message requests first configuration information, the first configuration information is used to configure a first radio bearer between the first terminal device and a network device, and the first radio bearer comprises a first signaling radio bearer SRB or a first data radio bearer DRB;
the sending unit is configured to send the first configuration information to the first terminal device; and
the receiving unit is further configured to receive, through the first radio bearer, a first message sent by the first terminal device, wherein the first message comprises a first RRC message, and the first RRC message requests to set up an RRC connection between a second terminal device and the network device.

43. The apparatus according to claim 42, wherein the first message further comprises identification information of the second terminal device.

44. The apparatus according to claim 42 or 43, wherein a logical channel configuration in the first configuration information comprises logical channel group LCG information and/or SR information, and the LCG information and/or the SR information request/requests, from the network device, a resource for sending the first message.

45. The apparatus according to any one of claims 42 to 44, wherein the second request message comprises a first indication, and the first indication indicates information that the first terminal device has a capability of providing a relay service; and/or
the second request message comprises a second indication, and the second indication indicates information about a quantity of terminal devices that can perform access through the first terminal device.

46. The apparatus according to any one of claims 42 to 45, wherein the first RRC message comprises an RRC connection request message, an RRC reestablishment request message, or an RRC connection resume request message.

47. A communication apparatus, comprising at least one processor and an interface circuit, wherein
the interface circuit is configured to provide a program or instructions for the at least one processor; and
the at least one processor is configured to execute the program or the instructions, to enable the communication apparatus to implement the method according to any one of claims 1 to 7 or the method according to any one of claims 14 to 18.

48. A communication apparatus, comprising at least one processor and an interface circuit, wherein
the interface circuit is configured to provide a program or instructions for the at least one processor; and
the at least one processor is configured to execute the program or the instructions, to enable the communication apparatus to implement the method according to any one of claims 8 to 13 or the method according to any one of claims 19 to 23.

49. A communication system, wherein the communication system comprises the communication apparatus according to claim 24, 26, or 28 and the communication apparatus according to claim 25, 27, or 29.

50. A computer-readable storage medium, wherein the storage medium stores instructions; and when the instructions are executed by a computer, the method according to any one of claims 1 to 7, the method according to any one of claims 8 to 13, the method according to any one of claims 14 to 18, or the method according to any one of claims 19 to 23 is performed.

51. A computer program product, wherein when the computer program product is executed by a processor, the processor performs the method according to any one of claims 1 to 7, the method according to any one of claims 8 to 13, the method according to any one of claims 14 to 18, or the method according to any one of claims 19 to 23.
